(19) Europäisches Patentamt
European Patent Office
Office européen des brevets

(11) EP 3 900 086 B1

(12) **EUROPEAN PATENT SPECIFICATION**

(45) Date of publication and mention of the grant of the patent:
**11.01.2023 Bulletin 2023/02**

(21) Application number: **19809468.2**

(22) Date of filing: **26.11.2019**

(51) International Patent Classification (IPC):
***H01M 4/62*** *(2006.01)* ***H01M 4/131*** *(2010.01)*
***H01M 4/505*** *(2010.01)* ***H01M 4/525*** *(2010.01)*
***H01M 4/66*** *(2006.01)*

(52) Cooperative Patent Classification (CPC):
**H01M 4/622; H01M 4/131; H01M 4/505; H01M 4/525; H01M 4/624; H01M 4/661;**
Y02E 60/10

(86) International application number:
**PCT/EP2019/082532**

(87) International publication number:
**WO 2020/126343 (25.06.2020 Gazette 2020/26)**

(54) **ELECTRODE COMPOSITION FOR A CATHODE OF A CELL OF A LITHIUM-ION BATTERY, A CATHODE SLURRY COMPOSITION, A CATHODE AND THE BATTERY INCORPORATING IT**

ELEKTRODENZUSAMMENSETZUNG FÜR EINE KATHODE EINER LITHIUMIONENBATTERIE, EINE KATHODENSUSPENSIONZUSAMMENSETZUNG, EINE KATHODE UND EINE BATTERIE DIESE UMFASSEND

COMPOSITION D'ÉLECTRODE POUR CATHODE D'UNE BATTERIE AU LITHIUM ION, UNE COMPOSITION DE SUSPENSION DE CATHODE, UNE CATHODE ET UNE BATTERIE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2018 EP 18213863**

(43) Date of publication of application:
**27.10.2021 Bulletin 2021/43**

(73) Proprietor: **ARLANXEO Deutschland GmbH**
**41540 Dormagen (DE)**

(72) Inventors:
- **BRANDAU, Sven**
**51371 Leverkusen (DE)**
- **KRIEMEN, Ella**
**50767 Köln (DE)**

(56) References cited:
**US-A1- 2014 114 025**
**US-A1- 2017 335 037**
**US-A1- 2018 175 366**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 900 086 B1

## Description

### Field of Invention

The present invention relates to an electrode composition for a cathode of a cell of a lithium-ion battery comprising an epoxy group-containing fluorine-free copolymer, a cathode slurry composition comprising the electrode composition, a cathode, a process for manufacturing this cathode, and a lithium-ion battery having one or more cells incorporating this cathode.

### Background of Invention

Lithium-ion batteries consist of at least two conductive Coulombic electrodes of different polarities, the negative electrode or anode (generally made of graphite) and the positive electrode or cathode, between which electrodes a separator is located, which separator consists of an electrical insulator imbibed with an aprotic electrolyte based on $Li^+$ ion cations ensuring the ionic conductivity. The electrolytes used in these lithium-ion batteries typically consist of a lithium salt, for example $LiPF_6$, $LiAsF_6$, $LiCF_3SO_3$ or $LiCO_4$, which is dissolved in a mixture of non-aqueous solvents such as acetonitrile, tetrahydrofuran, or more often a carbonate, for example of ethylene carbonate, ethyl methyl carbonate dimethyl carbonate, vinylene carbonate or propylene carbonate. The active material of the cathode of a lithium-ion battery allows reversible insertion/removal of lithium ions into/from this cathode, and the higher the mass fraction of this active material in the cathode, the higher its capacity. The cathode must also contain an electrically conductive compound, such as carbon black and, in order to provide it with sufficient mechanical cohesion, a polymer binder, which is required as well for a god adhesion to the collector foil. The binder must therefore interact with both the active material and the electrical conductor, while maintaining electrochemical stability and high flexibility. A lithium-ion battery is thus based on the reversible exchange of lithium ions between the anode and the cathode during the charging and discharging of the battery, and, for a very low weight, by virtue of the physical properties of lithium, such a battery has a high energy density.

The cathodes of lithium-ion batteries are often manufactured using a process comprising, in succession, a step of dissolving and/or dispersing the polymer binder, the active material, the conductive material and optionally a dispersant, in a solvent, a step of applying the obtained cathode slurry composition on a current collector, and then lastly a step of evaporating this solvent.

The polymer binder is dispersed in the cathode slurry composition to improve adherence between the cathode active material and adhesion of the cathode active material with the current collector. Simultaneously the polymer binder assists the dispersion of the conductive material. The electrolyte holding ability of the polymer binder improves battery characteristics.

During the charging-discharging process the lithium ions are loaded and unloaded into the active material. Due to this movement of lithium ions expansion and dilation of the cathode and anode material can occur. It is therefore highly desirable to use elastomeric materials as binder, for lithium-ion batteries, to enable flexible movement of the active material during use without delamination from the current collector or crack formation. Unfortunately highly crystalline binders might be too stiff to enable movement and a rubber type binder will be preferred.

The polymer binder is an important part of the electrode and used to help disperse the active material and conductive material in the cathode slurry composition, to stabilize these materials in the slurry during the cathode preparation and enable smooth cathodes with well-defined pore structure. During use, the cohesion of the cathode and its adhesion with the current collector is of vital importance and influenced strongly by the type, and the respective functional moieties of the polymer, of binder used. Adhesion and cohesion is a key property of the polymer binder which determines the final performance of the lithium-ion batteries, especially in the long term. A good polymer binder guarantees the homogeneous dispersion of active material and conductive material together with stable bonding to the metallic collector.

Many types of polymer binders can be used, nevertheless a gradual changeover from conventional electrodes using fluorinated polymers, based on PVDF (polyvinylidene fluoride), which is easily compatible with a cathode operating at a high operating voltage, or mixtures of PVDF with various other polymer binders, as e.g. carboxymethylcellulose (CMC), styrene butadiene rubber (SBR) or polyacrylic acid (PAA), is taking place. PVDF is the most widely used polymer binder in lithium-ion batteries as it exhibits electrochemical stability, bonding strength and low thermal degradation. Due to its high crystallinity levels, homopolymer PVDF offers high resistance in typical electrolytes used in lithium-ion batteries. However, the low flexibility of PVDF might not meet the demands of long cycle life for cathode due to breaking of the bonds between the cathode active material and the conductive material when the durable expansion/contraction process of the cathode active material occurs during cycling.

Moreover the occasional occurrences of battery fires have caused some concern especially regarding the risk for spontaneous fires and the intense heat generated by such fires. While the fire itself and the heat it generates may

be a serious threat in many situations, the risks associated with gas and smoke emissions from malfunctioning lithium-ion batteries may in some circumstances be a larger threat, especially in confined environments where people are present, such as in an aircraft, a submarine, a mine shaft, a spacecraft or in a home equipped with a battery energy storage system. At elevated temperatures the parts of the battery such as the polyvinylidene fluoride (PVDF) binder in the electrodes, may form toxic gases such as hydrogen fluoride (HF).

A lot of research was also focused on the cathode active material optimizations to enhance the electrochemical properties of lithium-ion batteries, while less attention was devoted yet in the past to the advancement of the electrically inactive components of the cathode, such as the polymer binder. However, a recent trend was to develop novel electrode compositions based on typical cathode active materials to substitute the fluor containing polymer binders, such as PVDF, with polymer binders with good adhesion and cohesion as well as high capacity retention to obtain a long lifetime of the battery.

EP-A-2 658 909 discloses an epoxy group-containing, optionally completely or partially hydrogenated nitrile rubber terpolymer, which comprises repeating units derived from at least one conjugated diene, at least one $\alpha,\beta$-unsaturated nitrile and optionally at least one additional copolymerizable monomer. No information are given regarding the usage of such a material in electronic devices.

US-2006/228627 discloses a binder for electrode of lithium-ion secondary battery, comprised of a copolymer composed of 15 to 80 weight % of units from ethylenically unsaturated monomer (A) whose homopolymerization yields a polymer soluble in N-methylpyrrolidone (NMP) and 20 to 85 weight-% of units from ethylenically unsaturated monomer (B). Binder monomer composition consists of acrylonitrile, methacylic acid and/or 2-ethylhexyl acrylate as a monomer. This binder for electrode of lithium-ion secondary battery is fluorine-free and enables obtaining an electrode having a flexible electrode layer excelling in binding properties with industrial advantage. Nevertheless no information are given regarding capacity retention nor improvement of adhesion using epoxy moieties in polymer binder.

US-A-2014/114025 discloses vulcanizable compositions based on optionally fully or partly hydrogenated nitrile rubbers containing epoxy groups, and specific cross-linkers, which no longer require use of conventional cross-linkers, more particularly sulphur. The vulcanizates producible therefrom possess very good compression sets at room temperature, 100°C and 150°C, and additionally exhibit high tensile strength combined with good elongation at break. The document is silent on batteries and electrodes.

US-A-2015/0333332 discloses a lithium anode containing spherical lithium metal particles with an average diameter between 5 and 200 $\mu$m, which are bonded with a fluorine-free rubber-like binding agent such as saturated polyolefins and polyolefin copolymers, unsaturated polymers as well as hetero-element containing copolymers such as ethylene vinyl acetate (EVM), as well as galvanic cells containing the bonded lithium anode according to the invention and method for producing the bonded lithium anode.

US-A-2017/335037 relates to vulcanizable compositions comprising epoxy group-containing ethylene-vinyl acetate copolymers having a content of copolymerized vinyl acetate of at least 35% by weight, a content of copolymerized ethylene of at least 10% by weight, and also a content of copolymerized epoxy group-containing monomers of 0.5 to 6.2% by weight, a crosslinking aid and a cross-linker having a molar mass of less than 2000 g/mol, in the form of a polycarboxylic acid, a polycarboxylic ester, a polycarboxylic anhydride or a mixture thereof, and also a process for vulcanization thereof, the vulcanizates thereby obtainable and use thereof. The document is fully silent on batteries and electrodes.

US-A-2018/175366 discloses a method of making an electrode for an electrochemical cell including the step of providing an electrode composite comprising from 70-98% active material, from 0-10% conductive material additives, and from 2-20% polymer binder, based on the total weight of the electrode composite. The electrode composite is mixed and then compressed the electrode composite into an electrode composite sheet. The electrode composite sheet is applied to a current collector with pressure to form an electrode, wherein the electrode possesses positive characteristics for adhesion according to ASTM standard test D3359-09e2, entitled Standard Test Methods for Measuring Adhesion by Tape Test, and wherein the electrode composite sheet and the electrode possess positive characteristics for flexibility according to the Mandrel Test. The binder can be a single nonfluoropolymer binder. US-A-2018/175366 discloses many different binders including butyl acrylate-acrylonitrile-glycidyl methacrylate copolymers, however, without giving any preference compared to all the other binders mentioned therein. There is no hint in US-A-2018/175366 that epoxy group-containing fluorine-free copolymers such as epoxy group-containing ethylene-vinyl acetate copolymers or epoxy group-containing nitrile rubber copolymers can be advantageously used to provide cathodes that have excellent high peel strength, improved cycling-stability and improved capacity compared to fluorine-free copolymers without epoxy groups such as ethylene-vinyl acetate copolymer or nitrile rubber copolymer.

EP-A-0 374 666 discloses an ethylene/vinyl acetate/glycidyl methacrylate copolymer with 8.5 wt.-% glycidyl methacrylate (GMA) and a low Mooney viscosity of 4 (ML1-4@100°C). No physical-mechanical characterisations were performed as well as no compounding experiments. Furthermore, the use of these terpolymers as binders for electrodes or batteries is not disclosed as well as electrochemical characterisations of the terpolymer.

EP-A-3 015 483 discloses vulcanizable compositions comprising epoxy group-containing ethylene-vinyl acetate

copolymers with a content of polymerized vinyl acetate of at least 35 wt.-%, a content of polymerized ethylene of at least 10 wt.-% and a content of polymerized epoxy group-containing monomers of 0.5 to 6.2 wt.-%, a crosslinking auxiliary agent and a crosslinking agent having a molar mass of less than 2000 g/mol, in the form of a polycarboxylic acid, a polycarboxylic acid ester, a polycarboxylic acid anhydride or a mixture thereof. The use of these terpolymers as binders for electrodes or batteries as well as electrochemical characterisations are not disclosed.

However, no adequate polymer binder has been identified so far that is applicable to Li-containing cathode active materials to provide electrode compositions for a cathode of a cell of a lithium-ion battery with electrochemical stability, high bonding strength, high cycling stability, without breaking which can be easily processed.

Therefore, one aim of the present invention is to provide an electrode composition for cathodes for lithium-ion batteries that overcomes some or all of the aforementioned drawbacks.

It is an object of the invention to provide electrode compositions that can be used to provide cathodes having improved properties compared to conventional cathodes, e.g. with respect to peel strength, cycling-stability, capacity, and the like.

It was surprisingly discovered by the Applicant that an electrode composition comprising (i) a cathode active material and (ii) an epoxy group-containing fluorine-free copolymer selected from epoxy group-containing ethylene-vinyl acetate copolymer and epoxy group-containing nitrile rubber copolymer can be used to provide cathodes that have excellent high peel strength, improved cycling-stability and improved capacity compared to fluorine-free copolymers without epoxy groups such as ethylene-vinyl acetate copolymer or nitrile rubber copolymer.

## Summary of Invention

In a first aspect the present invention relates to an electrode composition for a cathode of a cell of a lithium-ion battery. The electrode composition comprising:

(i) at least one cathode active material and

(ii) at least one epoxy group-containing fluorine-free copolymer selected from

(a) epoxy group-containing ethylene-vinyl acetate copolymers comprising

- a vinyl acetate unit in an amount of at least 25% by weight; and
- an ethylene unit in an amount of at least 5% by weight; and
- an epoxy group-containing monomer unit in an amount of 0.01 to 30% by weight;

in each case based on the epoxy group-containing ethylene-vinyl acetate copolymer; and

(b) epoxy group-containing nitrile rubber copolymer comprising

- a $\alpha,\beta$-unsaturated nitrile unit in an amount of 5 to 60% by weight; and
- a conjugated diene unit, which is optionally fully or partially hydrogenated in an amount of 10 to 94.99% by weight; and
- an epoxy group-containing monomer unit in an amount of 0.01 to 30% by weight;

in each case based on the epoxy group-containing nitrile rubber copolymer.

In a further aspect the present invention relates to a cathode slurry composition. The cathode slurry composition comprises the aforementioned electrode composition, at least one conductive material and at least one solvent.

In a further aspect the present invention relates to a cathode. The cathode comprising a current collector and a cathode active material layer, whereas the cathode active material layer comprises the aforementioned electrode composition and the at least one conductive material.

In a further aspect the present invention relates to a lithium-ion battery. The lithium-ion battery comprising at least one cell comprising an anode, the aforementioned cathode, a separator and an electrolytic solution based on a lithium salt and on an organic solvent.

In a further aspect the present invention relates to a use of the aforementioned epoxy group-containing fluorine-free copolymer as a binder in an electrode composition for a cathode of a cell of a battery.

## Detailed Description

For a complete understanding of the present invention and the advantages thereof, reference is made to the following detailed description.

It should be appreciated that the various aspects and embodiments of the detailed description as disclosed herein are illustrative of the specific ways to make and use the invention.

*Cathode active material (i)* - The cathode active material according to the invention is selected from the group of lithium-containing metal oxides, including, optionally layered, lithium-containing metal oxides such as $LiCoO_2$, $LiNiO_2$, $LiMn_2O_4$ or $LiNiMnCoO_2$, lithium manganese oxides such as $LiMnO_3$, $LiMn_2O_3$, $LiMnO_2$ and the like, lithium nickel manganese cobalt oxides such as $Li_wNi_xMn_yCo_zO_2$ and the like, lithium nickel cobalt aluminium oxides such as $LiNiCoAlO_2$ and the like, or even modified nickel manganese cobalt oxides such as $Li_{1+a}Ni_xMn_zCo_yM_wO_2$ wherein, M may be at least one selected from the group consisting of aluminium (Al), copper (Cu), iron (Fe), vanadium (V), chromium (Cr), titanium (Ti), zirconium (Zr), zinc (Zn), tantalum (Ta), niobium (Nb), magnesium (Mg), boron (B), tungsten (W), and molybdenum (Mo), and a, x, y, z, and w represent an atomic fraction of each independent element, wherein $-0.5 \leq a \leq 0.5$, $0 < x \leq 1$, $0 < y \leq 1$, $0 \leq z \leq 1$, $0 \leq w \leq 1$, and $0 < x+y+z \leq 1$, lithium titanate such as $Li_4Ti_5O_{12}$ and the like, lithium copper oxides such as $Li_2CuO_2$, vanadium oxides such as $LiV_3O_8$, $LiFe_3O_4$, or phosphates such as $LiCoPO_4$, or $LiFePO_4$, that accepts and donates electrons in the cathode.

In a preferred embodiment, the at least one cathode active material (i) comprises a compound of the following Formula 1:

$$Li_{1+a}Ni_xCo_yMn_zM_wO_2 \qquad \text{[Formula 1]}$$

wherein, M may be at least one selected from the group consisting of aluminium (Al), copper (Cu), iron (Fe), vanadium (V), chromium (Cr), titanium (Ti), zirconium (Zr), zinc (Zn), tantalum (Ta), niobium (Nb), magnesium (Mg), boron (B), tungsten (W), and molybdenum (Mo), and a, x, y, z, and w represent an atomic fraction of each independent element, wherein $-0.5 \leq a \leq 0.5$, $0 < x \leq 1$, $0 < y \leq 1$, $0 \leq z \leq 1$, $0 \leq w \leq 1$, and $0 < x+y+z \leq 1$ or lithium iron phosphates (LFP).

In consideration of the significant improvement effect due to the mixed use of the conductive agent and the binder, the cathode active material (i) may comprise a nickel excess lithium composite metal oxide in which $-0.5 \leq a \leq 0.5$, $0 < x < 1$, $0 < y < 1$, $0 < z < 1$, $0 \leq w \leq 1$, and $y+z \leq x$ in Formula 1.

Specifically, in terms of increasing capacity characteristics and stability of the battery, the cathode active material (i) may comprise $LiNi_{0.3}Mn_{0.3}Co_{0.3}O_2$, $LiNi_{0.6}Mn_{0.2}Co_{0.2}O_2$, $LiNi_{0.5}Mn_{0.3}CO_{0.2}O_2$, $LiNi_{0.7}Mn_{0.15}CO_{0.15}O_2$, or $LiNi_{0.8}Mn_{0.1}Co_{0.1}O_2$, and any one thereof or a mixture of two or more thereof may be used.

Particularly preferred cathode active materials (i) according to invention are lithium-nickel-cobalt-manganese-oxide (NMC), lithium iron phosphates (LFP) or lithium-nickel-cobalt-aluminium-oxide (NCA). Particularly preferred is lithium-nickel-cobalt-manganese-oxide (NMC).

*Epoxy group-containing fluorine-free copolymer (ii)* - The epoxy group-containing fluorine-free copolymer (ii) is (a) at least one epoxy group-containing ethylene-vinyl acetate copolymer or (b) at least one epoxy group-containing nitrile rubber copolymer.

The term copolymer encompasses polymer having more than one monomer unit. In one embodiment of the invention, the copolymer is derived exclusively, for example, from the three monomer types (a), (b) and (c) as described below, and is therefore a terpolymer. The term "copolymer" likewise encompasses, for example, additionally quaterpolymers, derived from the three monomer types (a), (b) and (c) described and a further monomer unit.

The electrode composition comprises (i) at least one cathode active material and (ii) at least one epoxy group-containing fluorine-free copolymer, wherein the epoxy group-containing fluorine-free copolymer (ii) comprises

(a) at least one epoxy group-containing ethylene-vinyl acetate copolymer, comprising a vinyl acetate unit (VA), an ethylene unit and an epoxy group-containing monomer unit, or

(b) at least one epoxy group-containing nitrile rubber copolymer, comprising a $\alpha,\beta$-unsaturated nitrile unit, a conjugated diene unit, which is optionally fully or partially hydrogenated, and an epoxy group-containing monomer unit.

The epoxy group-containing nitrile rubber copolymer (b) according to this invention may be optionally either fully unsaturated, partially hydrogenated or fully hydrogenated. In a preferred embodiment of the electrode composition, the epoxy group-containing nitrile rubber copolymer (b) is partially or fully hydrogenated, more preferably fully hydrogenated. A fully hydrogenated epoxy group-containing nitrile rubber copolymer (b) comprises less than 1% residual double bonds of the fully unsaturated epoxy group-containing nitrile rubber copolymer (b).

As α,β-unsaturated nitrile or the epoxy group-containing nitrile rubber copolymer (b), it is possible to use any known α,β-unsaturated nitrile, preferably a ($C_3$-$C_5$) α,β-unsaturated nitrile such as acrylonitrile, methacrylonitrile, ethacrylonitrile or mixtures thereof. Particular preference is given to acrylonitrile.

The conjugated diene of the epoxy group-containing nitrile rubber copolymer (b) can be of any nature. Preference is given to using ($C_4$-$C_6$) conjugated dienes. Particular preference is given to 1,3-butadiene, isoprene, 2,3-dimethylbutadiene, piperylene or mixtures thereof. Very particular preference is given to 1,3-butadiene and isoprene or mixtures thereof. Especial preference is given to 1,3-butadiene.

A particularly preferred epoxy group-containing nitrile rubber copolymer (b) used in the inventive electrode composition is thus a copolymer having repeating units derived from acrylonitrile and 1,3-butadiene and an epoxy group-containing monomer.

The electrode composition comprises (i) at least one cathode active material and (ii) at least one epoxy group-containing fluorine-free copolymer, wherein the epoxy group-containing fluorine-free copolymer (ii) is

(a) at least one epoxy group-containing ethylene-vinyl acetate copolymer comprising

- a vinyl acetate unit in an amount of at least 25% by weight, preferably at least 30% by weight, more preferably at least 35% by weight and particularly preferably at least 40% by weight and

- an ethylene unit in an amount of at least 5% by weight and preferably at least 8% by weight, more preferably at least 10% by weight and particularly preferably at least 15% by weight and

- an epoxy group-containing monomer unit in an amount of 0.01 to 30% by weight, preferred 0.05 to 25% by weight, more preferably 0.075 to 20% by weight, even more preferred 0.1 to 15% by weight in each case based on the epoxy group-containing ethylene-vinyl acetate copolymer; or

(b) at least one epoxy group-containing nitrile rubber copolymer comprising

- a α,β-unsaturated nitrile unit in an amount of 5 to 60% by weight, preferred 10 to 55% by weight, even more preferred 13 to 53% by weight,

- an conjugated diene unit, which is optionally fully or partially hydrogenated in an amount of 10 to 94.99% by weight, preferred 20 to 89.95% by weight, even more preferred 36 to 86.9% by weight and

- an epoxy group-containing monomer unit in an amount of 0.01 to 30% by weight, preferred 0.05 to 25% by weight, even more preferred 0.1 to 15% by weight in each case based on the optionally fully or partially hydrogenated epoxy group-containing nitrile rubber copolymer.

The epoxy group-containing fluorine-free copolymer (ii) used according to the invention preferably comprises repeating units derived from one or more, particularly preferably from one, epoxy group-containing monomer(s) of the general formula (I)

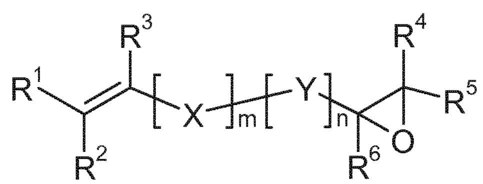

(I)

wherein

m is 0 or 1 and

X is O, $O(CR_2)_p$, $(CR_2)_pO$, C(=O)O, $C(=O)O(CR_2)_p$, C(=O)NR, $(CR_2)_p$, N(R), $N(R)(CR_2)_p$, P(R), $P(R)(CR_2)_p$, P(=O)(R), $P(=O)(R)(CR_2)_p$, S, $S(CR_2)_p$, S(=O), $S(=O)(CR_2)_p$, $S(=O)_2(CR_2)_p$ or $S(=O)_2$, wherein R in these radicals may have the same definitions as $R^1$-$R^6$

Y represents repeating units derived from one or more, preferably one, mono- or polyunsaturated monomer(s),

comprising conjugated or non-conjugated dienes, alkynes and vinyl compounds, or represents a structural element which derives from polymers comprising polyethers, more particularly polyalkylene glycol ethers and polyalkylene oxides, polysiloxanes, polyols, polycarbonates, polyurethanes, polyisocyanates, polysaccharides, polyesters and polyamides,

n and p are the same or different and are each in the range of 0 to 10 000, preferably 0 to 100 and especially preferably n is in the range from 0 to 100 and at the same time p = 0, R, $R^1$, $R^2$, $R^3$, $R^4$, $R^5$ and $R^6$ are identical or different and are H, a linear or branched, saturated or mono- or polyunsaturated alkyl radical, a saturated or mono- or polyunsaturated carbo- or heterocyclyl radical, aryl, heteroaryl, arylalkyl, heteroarylalkyl, alkoxy, aryloxy, heteroaryloxy, amino, amido, carbamoyl, alkylthio, arylthio, sulphanyl, thiocarboxyl, sulphinyl, sulphono, sulphino, sulpheno, sulphonic acids, sulphamoyl, hydroxyimino, alkoxycarbonyl, F, Cl, Br, I, hydroxyl, phosphonato, phosphinato, silyl, silyloxy, nitrile, borates, selenates, carbonyl, carboxyl, oxycarbonyl, oxysulphonyl, oxo, thioxo, epoxy, cyanates, thiocyanates, isocyanates, thioisocyanates or isocyanides.

Optionally, the definitions stated for the radicals R, $R^1$ to $R^6$ and the repeating units Y of the general formula (I) are in each case singly or multiply substituted.

Preferably, the following radicals from the definitions for R and $R^1$ to $R^6$ have such single or multiple substitution: alkyl, carbocyclyl, heterocyclyl, aryl, heteroaryl, arylalkyl, heteroarylalkyl, alkoxy, aryloxy, alkylthio, arylthio, amino, amido, carbamoyl, F, Cl, Br, I, hydroxyl, phosphonato, phosphinato, sulphanyl, thiocarboxyl, sulphinyl, sulphono, sulphino, sulpheno, sulphamoyl, silyl, silyloxy, carbonyl, carboxyl, oxycarbonyl, oxysulphonyl, oxo, thioxo, borates, selenates and epoxy. Useful substituents include - provided that chemically stable compounds are the result - all definitions that R can assume. Particularly suitable substituents are alkyl, carbocyclyl, aryl, halogen, preferably fluorine, chlorine, bromine or iodine, nitrile (CN) and carboxyl.

Very particular preference is given to using one or more epoxy group-containing monomers of general formula (I), where X, R and $R^1$ to $R^6$ have the definitions mentioned previously for general formula (I), m is equal to 1, p is equal to 1 and n is equal to zero.

Preferred examples of epoxy group-containing monomers are selected from the group consisting of 2-ethylglycidyl acrylate, 2-ethylglycidyl methacrylate, 2-(n-propyl)glycidyl acrylate, 2-(n-propyl)glycidyl methacrylate, 2-(n-butyl)glycidyl acrylate, 2-(n-butyl)glycidyl methacrylate, glycidylmethyl acrylate, glycidylmethyl methacrylate, glycidyl acrylate, glycidyl methacrylate, (3',4'-epoxyheptyl)-2-ethyl acrylate, (3',4'-epoxyheptyl)-2-ethyl methacrylate, 6',7'-epoxyheptyl acrylate, 6',7'-epoxyheptyl methacrylate, allyl glycidyl ether, allyl 3,4-epoxyheptyl ether, 6,7-epoxyheptyl allyl ether, vinyl glycidyl ether, vinyl 3,4-epoxyheptyl ether, 3,4-epoxyheptyl vinyl ether, 6,7-epoxyheptyl vinyl ether, o-vinylbenzyl glycidyl ether, m-vinylbenzyl glycidyl ether, p-vinylbenzyl glycidyl ether and 3-vinylcyclohexene oxide.

Most preferably, the epoxy group-containing monomer of the epoxy group-containing fluorine-free copolymer (ii) is a glycidyl (alkyl)acrylate, preferably glycidyl acrylate and/or glycidyl methacrylate.

The epoxy group-containing fluorine-free copolymer used according to the invention, may comprise repeating units of one or more further copolymerizable monomers known in the art, e.g. $\alpha,\beta$-unsaturated (preferably mono-unsaturated) monocarboxylic acids, their esters and amides, $\alpha,\beta$-unsaturated (preferably mono-unsaturated) dicarboxylic acids, their mono- or diesters, as well as the respective anhydrides or amides of said $\alpha,\beta$-unsaturated dicarboxylic acids, vinyl esters, vinyl ketones, vinyl aromatic compounds, $\alpha$-monoolefins, vinyl monomers having a hydroxyl group, and carbon monoxide.

As $\alpha,\beta$-unsaturated monocarboxylic acids, preference is given to using acrylic acid and methacrylic acid.

It is also possible to use esters of $\alpha,\beta$-unsaturated monocarboxylic acids, preferably the alkyl esters and alkoxyalkyl esters thereof. Preference is given to the alkyl esters, in particular $C_1$-$C_{18}$-alkyl esters, of $\alpha,\beta$-unsaturated monocarboxylic acids. Particular preference is given to alkyl esters, in particular $C_1$-$C_{18}$-alkyl esters, of acrylic acid or of methacrylic acid, in particular methyl acrylate, ethyl acrylate, propyl acrylate, n-butyl acrylate, tert-butyl acrylate, 2-ethylhexyl acrylate, n-dodecyl acrylate, methyl methacrylate, ethyl methacrylate, butyl methacrylate and 2-ethylhexyl methacrylate. Preference is also given to alkoxyalkyl esters of $\alpha,\beta$-unsaturated monocarboxylic acids, particularly preferably alkoxyalkyl esters of acrylic acid or of methacrylic acid, in particular $C_2$-$C_{14}$-alkoxyalkyl esters of acrylic acid or of methacrylic acid, very particularly preferably preferably methoxymethyl (meth)acrylate, methoxyethyl (meth)acrylate, ethoxyethyl (meth)acrylate, butoxyethyl (meth)acrylate and methoxyethoxyethyl (meth)acrylate; butoxydiethylenglycol methacrylate, polyethylene glycol acrylates and polyethylene glycol methacrylates. It is also possible to use mixtures of alkyl esters such as those mentioned above with alkoxyalkyl esters, e.g. in the form of those mentioned above. It is also possible to use hydroxylalkyl acrylates and hydroxyalkyl methacrylate in which the number of carbon atoms in the hydroxyalkyl groups is 1-12; preferably 2-hydroxyethyl actylate, 2-hydroxyethyl methacrylate and 3-hydroxypropyl acrylate; it is also possible to use $\alpha,\beta$-unsaturated carboxylic esters containing amino groups, e.g. dimethylaminomethyl acrylate, N-(2-hydroxyethyl)acrylamide, N-(2-hydroxymethyl)acrylamide, urethane (meth)acrylate and diethylaminoethyl acrylate.

It is also possible to use $\alpha,\beta$-unsaturated dicarboxylic acids, preferably maleic acid, fumaric acid, crotonic acid, itaconic acid, citraconic acid and measaconic acid, as further copolymerizable monomers.

$\alpha,\beta$-Unsaturated dicarboxylic anhydrides, preferably maleic anhydride, itaconic anhydride, citraconic anhydride and mesaconic anhydride, can also be used.

Monoesters or diesters of $\alpha,\beta$-unsaturated dicarboxylic acids can also be used. These $\alpha,\beta$-unsaturated dicarboxlic monoesters or diesters can be, for example, alkyl, preferably $C_1$-$C_{10}$-alkyl, in particular ethyl, n-propyl, isopropyl, n-butyl, tert-butyl, n-pentyl or n-hexyl, monoesters or diesters, alkoxyalkyl, preferably $C_2$-$C_{12}$-alkoxyalkyl, particularly preferably $C_3$-$C_8$-alkoxyalkyl, monoesters or diesters, hydroxyalkyl, preferably $C_1$-$C_{12}$-hydroxyalkyl, particularly preferably $C_3$-$C_8$-hydroxyalkyl, monoesters or diesters, cycloalkyl, preferably $C_5$-$C_{12}$-cycloalkyl, particularly preferably $C_6$-$C_{12}$-cycloalkyl, monoesters or diesters, alkylcycloalkyl, preferably $C_6$-$C_{12}$-alkylcycloalkyl, particularly preferably $C_7$-$C_{10}$-alkylcycloalkyl, monoesters or diesters, aryl, preferably $C_6$-$C_{14}$-aryl, monoesters or diesters, with the diesters in each case also being able to be mixed esters.

As $\alpha,\beta$-unsaturated dicarboxylic diesters, it is possible to use the analogous diesters based on the abovementioned monoester groups, with the ester groups also being able to be chemically different ester groups.

As vinyl esters it is possible to use, for example, vinyl propionate and vinyl butyrate

As vinyl ketones it is possible to use, for example, methyl vinyl ketone and ethyl vinyl ketone.

As vinyl aromatic compounds it is possible to use, for example, styrene, $\alpha$-methylstyrene and vinyltoluene.

As $\alpha$-monoolefins it is possible to use, for example, $C_2$-$C_{12}$-olefins as for example, propylene, 1-butene, 4-butene, 4-methyl-1-pentene, 1-hexene and 1-octene

As vinyl monomers having a hydroxyl group it is possible to use, for example, $\beta$-hydroxyethyl acrylate and 4-hydroxybutyl acrylate.

Possible further copolymerizable monomers are also free-radically polymerizable compounds which contain at least two olefinic double bonds per molecule. Such monomers accordingly lead to a certain degree of precrosslinking of the epoxy group-containing fluorine-free copolymer. Examples of multiply unsaturated compounds are acrylates, methacrylates, or itaconates of polyols, e.g. ethylene glycol diacrylate, diethylene glycol dimethacrylate, triethylene glycol diacrylate, 1,4-butanediol diacrylate, 1,2-propanediol diacrylate, 1,3-butanediol dimethacrylate, neopentyl glycol diacrylate, trimethylolpropane di(meth)acrylate, trimethylolethane di(meth)acrylate, glycerol diacrylate and triacrylate, pentaerythritol di-, tri- and tetraacrylate or di-, tri- and tetramethacrylate, dipentaerythritol tetra-, penta- and hexaacrylate or tetra-, penta- and hexamethacrylate or tetra-, penta- and hexaitaconate, sorbitol tetraacrylate, sorbital hexamethacrylate, diacrylates or dimethacrylates of 1,4-cyclohexanediol, 1,4-dimethylolcyclohexane, 2,2-bis(4-hydroxyphenyl)propane, of polyethylene glycols or of oligoesters or oligourethanes having terminal hydroxyl groups. As multiply unsaturated monomers, it is also possible to use acrylamides such as methylenebisacrylamide, hexamethylene-1,6-bisacrylamide, diethylenetriamine trismethacrylamide, bis(methacrylamido-propoxy)ethane or 2-acrylamidoethyl acrylate. Examples of multiply unsaturated vinyl and allyl compounds are divinylbenzene, ethylene glycol divinyl ether, diallyl phthalate, allyl methacrylate, diallyl maleate, triallyl isocyanurate or triallyl phosphate.

The total proportion of further copolymerizable monomers incorporated is less than 15% by weight, preferably less than 10% by weight, particularly preferably less than 7.5% by weight and especially preferably less than 5% by weight, based on the epoxy group-containing fluorine-free copolymer. The total content monomers and the optionally used further monomers mentioned above adds up to 100% by weight, based on the epoxy group-containing fluorine-free copolymer.

The epoxy group-containing monomers are preferably distributed statistically over the polymer chain of the epoxy group-containing fluorine-free copolymer used in accordance with the invention.

Process for preparing epoxy group-containing ethylene-vinyl acetate copolymer (a)

The epoxy group-containing copolymers used in accordance with the invention are obtainable by a method in which, after the start of the polymerization reaction of ethylene and vinyl acetate, epoxy group-containing monomer is added to the reaction mixture. The reaction mixture can even additionally comprise one or more of the above further monomers at the start, and already comprise epoxy group-containing monomers. In this case, the process is typically carried out as a batch process, e.g. in a stirred tank reactor, or as a continuous process, e.g. in a tank cascade or a tubular reactor. The addition of the epoxy group-containing monomer after the start in a batch process is understood to mean that, after the reaction has started, the epoxy-group-containing monomer is added in portions or continuously, preferably continuously, to the reaction mixture, whereas in a continuous process the epoxy group-containing monomer is added to the reaction mixture at least one, preferably at more than one position, which is/are located downstream of the position of the reaction start. The reaction start is in this case the time point or the position at which the polymerization of at least vinyl acetate and ethylene first takes place.

The process for preparing the epoxy group-containing ethylene-vinyl acetate copolymers used according to the invention is preferably carried out as a solution polymerization at temperatures >45°C, particularly preferably >48°C,

most preferably at >50°C. The polymerization is typically carried out at pressures of 330 to 450 bar. The mean residence time is typically in the range of 0.5 to 12 hours.

In a preferred embodiment, the reaction solution comprises:

i) 1 to 80% by weight, preferably 5 to 70% by weight of ethylene,

ii) 1 to 99% by weight, preferably 25 to 95% by weight of vinyl acetate and

iii) 0.01 to 30% by weight of epoxy group-containing monomer

based in each case on the sum total of components i) + ii) + iii).

The reaction solution typically comprises 20 to 60% by weight (based on the total mass of the reaction solution) of a polar organic solvent, preferably an alcoholic solvent having one to 4 carbon atoms, particularly preferably *tert*.-butanol, or a carbonate such as dimethyl carbonate (DMC), ethylene carbonate (EC), diethyl carbonate (DEC), propylene carbonate (PC), butylene carbonate (BC), fluoroethylene carbonate (FEC) or methyl ethyl carbonate (MEC).

The reaction solution at the start of the polymerization suitably already comprises epoxy group-containing monomer, preferably in an amount of up to 100% by weight, more preferably up to 75% by weight, particularly preferably up to 50% by weight, especially preferably 40% by weight, and most preferably in the range of 1 to 30% by weight, based on the total amount of epoxy group-containing monomer to be added.

The polymerization is effected by means of a free-radically decomposing initiator, of which the proportion, based on the sum total of components i) + ii), is typically 0.001 to 1.5% by weight.

After the start of the polymerization reaction, the epoxy group-containing monomer is optionally metered in without solvent or as a functionalization solution, i.e. as a mixture with vinyl acetate and/or with the process solvent used.

The functionalization solution typically comprises:

iv) 5 to 95% by weight of vinyl acetate and

v) 5 to 95% by weight of epoxy group-containing monomer

based in each case on the sum total of components (iv + v) and also 20 to 60% by weight of the polar organic solvent, based on the sum total of the components iv) + v) + polar organic solvent.

The addition of the above functionalization solution has the advantage, compared to the addition without solvent, that the mixture is liquid over a wide temperature range and therefore heating of the storage container and pipelines is generally unnecessary.

The epoxy group-containing monomer is preferably metered in up to at least a time point (in a batch process) or at least a point in the reaction regime (in a continuous process) at which the reaction mixture has a solids content of at least 1% by weight, preferably at least 2% by weight, particularly preferably at least 5% by weight and especially preferably at least 10% by weight.

The metered addition of the functionalization solution takes place preferably continuously in the case of batch polymerizations. The polymerization is particularly preferably carried out continuously in a reactor cascade. In this case, the functionalization solution is typically metered into one, preferably more than one, reactor(s) following the reactor in which the polymerization is started, typically at a temperature in the range of 55°C to 110°C. In the case of carrying out the process in a tubular reactor, the addition is effected at least one point downstream of the point at which the reaction is started.

The above metered addition of the functionalization solution leads to a higher chemical uniformity of the resulting epoxy group-containing ethylene-vinyl acetate copolymer.

Without metered addition of the epoxy-containing monomer, as described in EP 0 374 666 B1, the total amount of epoxy-containing monomer is already present at the start of the polymerization, whereby presumably formation of blocks of glycidyl methacrylate takes place, which leads to a non-uniform distribution in the polymer.

By the metered addition of the epoxy-containing monomer or of the functionalization solution, a virtually complete incorporation of the epoxy group-containing monomers can take place with broadly statistical distribution of the epoxy group-containing monomers in the polymer backbone and at the same time formation of blocks of the epoxy group-containing monomers and the formation of pure ethylene-vinyl acetate copolymers are avoided or at least reduced.

Moreover, the conversion at low amounts used of epoxy group-containing monomers could be significantly increased by the above process.

The copolymer solution after completion of the polymerization preferably has less than 300 ppm, preferably less than 200 ppm and most preferably less than 150 ppm of unbound epoxy group-containing monomer.

The polymerization initiators used are preferably peroxydicarbonates, hydroperoxides, peroxides or azo compounds such as 2,2'-azobis(2,4-dimethylvaleronitrile) (ADVN), 2,2'-azoisobutyronitrile (AIBN), 2,2'-azobis(4-methoxy-2,4-dimethylvaleronitrile), 2,2'-azobis(2-methylbutyronitrile), 1,1'-azobis(cyclohexane-1-carbonitrile), dimethyl 2,2'-azobis(2-methylpropionate), 2,2'-azobis[N-(2-propenyl)-2-methylpropionamide], 1-[(1-cyano-1-methylethyl)azo]formamide, 2,2'-azobis(N-butyl-2-methylpropionamide), 2,2'-azobis(N-cyclohexyl-2-methylpropionamide), 2,2'-azobis[2-(2-imidazolin-2-yl)propane] dihydrochloride, 2,2'-azobis[2-(2-imidazolin-2-yl)propane] disulphate dihydrate, 2,2'-azobis(2-methylpropionamidine) dihydrochloride, 2,2'-azobis[N-(2-carboxyethyl)-2-methylpropion-amidine] hydrate, 2,2'-azobis{2-[1-(2-hydroxyethyl)-2-imidazolin-2-yl]propane} dihydrochloride, 2,2'-azobis[2-(2-imidazolin-2-yl)propane], 2,2'-azobis(1-imino-1-pyrrolidino-2-ethylpropane) dihydrochloride, 2,2'-azobis{2-methyl-N-[1,1-bis(hydroxymethyl)-2-hydroxyethyl]propionamide}, 2,2'-azobis[2-methyl-N-(2-hydroxyethyl)propionamide], acetyl cyclohexanesulphonyl peroxide, bis(4-tert-butylcyclohexyl) peroxydicarbonate and bis(2-ethylhexyl) peroxydicarbonate. Particular preference is given to using, as polymerization initiator, 2,2'-azobis(2,4-dimethylvaleronitrile) (ADVN), 2,2'-azoisobutyronitrile (AIBN) or 2,2'-azobis(4-methoxy-2,4-dimethylvaleronitrile).

It has been shown, surprisingly, that epoxy group-containing fluorine-free copolymers markedly increase the peel strength, improve the cycling-stability and improve the capacity compared to the fluorine-free copolymers without epoxy-groups.

The binding properties between the cathode active material particles between each other are improved. Furthermore, the binding properties between the cathode active material layer and the current collector are improved. Thus, the cathode slurry composition and the cathode active material layer are suppressed from falling off during the production step of the cathode. Due to the improved binding properties, the cathode shows excellent cycle characteristics.

*Process for preparing epoxy group-containing nitrile rubber copolymer (b)*

*Polymerization of epoxy group-containing nitrile rubber copolymer*

The emulsion polymerisation of nitrile rubbers is well-known and typically water-soluble salts of anionic emulsifiers or uncharged emulsifiers are used as emulsifiers. Preference is given to using anionic emulsifiers.

As anionic emulsifiers, it is possible to use modified resin acids which are obtained by dimerization, disproportionation, hydrogenation and modification of resin acid mixtures containing abietic acid, neoabietic acid, palustric acid, laevopimaric acid. A particularly preferred modified resin acid is disproportionated resin acid (Ullmann's Encyclopedia of Industrial Chemistry, 6th Edition. Volume 31, pp. 345-355).

It is also possible to use $C_6$-$C_{22}$ fatty acids as anionic emulsifiers. They can be fully saturated or have one or more double bonds in the molecule. Examples of fatty acids are caproic acid, lauric acid, myristic acid, palmitic acid, stearic acid, oleic acid, linoleic acid, linolenic acid. The carboxylic acids are usually based on origin-specific oils or fats such as castor oil, cottonseed oil, peanut oil, linseed oil, coconut oil, palm kernel oil, olive oil, rapeseed oil, soybean oil, fish oil and beef talo, etc. (Ullmann's Encyclopaedia of Industrial Chemistry, 6th Edition, Volume 13, pp. 75-108). Preferred carboxylic acids are derived from coconut fatty acid and from beef talo and are partially or fully hydrogenated.

Such carboxylic acids based on modified resin acids or fatty acids are used as water-soluble lithium, sodium, potassium and ammonium salts. The sodium and potassium salts are preferred.

Further anionic emulsifiers are sulphonates, sulphates and phosphates which are bound to an organic radical. Possible organic radicals are $C_6$-$C_{25}$ aliphatic radicals, aromatic radicals, alkylated aromatics with 3 to 12 carbon atoms in the alkyl chain, fused aromatics and methylene-bridged aromatics, with the methylene-bridged and fused aromatics being able to be additionally alkylated. Typically the sulphates, sulphonates and phosphates are used as lithium, sodium, potassium or ammonium salts. sodium, potassium and ammonium salts are preferred.

Examples of such sulphonates, sulphates and phosphates are Na-laurylsulphate, Na-alkylsulphonate, sodium alkylarylsulphonate, sodium salts of methylene-bridged aryl sulphonates, sodium salts of alkylated naphthalenesulphonates and the sodium salts of methylene-bridged naphthalenesulphonates which can also be oligomerized, with the degree of oligomerization being in the range from 2 to 10. The alkylated naphthalenesulphonic acids and the methylene-bridged (and optionally alkylated) naphthalenesulphonic acids are usually present as mixtures of isomers which can also contain more than 1 sulphonic acid group (from 2 to 3 sulphonic acid groups) in the molecule. Particular preference is given to sodium laurylsulphate, sodium alkylsulphonate mixtures having from 12 to 18 carbon atoms, sodium alkylarylsulphonates, sodium diisobutylenenaphthalenesulphonate, methylene-bridged polynaphthalene-sulphonate mixtures and methylene-bridged arylsulphonate mixtures.

Uncharged emulsifiers are derived from addition products of ethylene oxide and of propylene oxide onto compounds having a sufficiently acidic hydrogen. These include, for example, phenol, alkylated phenol and alkylated amines. The average degrees of polymerization of the epoxides are in the range from 2 to 20. Examples of uncharged emulsifiers are ethoxylated nonylphenols having 8, 10 and 12 ethylene oxide units. The uncharged emulsifiers are usually not used alone but in combination with anionic emulsifiers.

Preference is given to the sodium and potassium salts of disproportionated abietic acid and of partially hydrogenated talo fatty acid and also mixtures thereof, sodium laurylsulphate, sodium alkylsulphonates, sodium alkylbenzenesulphonate and also alkylated and methylene-bridged naphthalenesulfonic acids.

The emulsifiers are used in an amount of from 0.2 to 15 parts by weight, preferably from 0.5 to 12.5 parts by weight, particularly preferably from 1.0 to 10 parts by weight, per 100 parts by weight of the monomer mixture.

Initiation of the emulsion polymerization is typically carried out using polymerization initiators which disintegrate into free radicals. As such initiators include compounds which contain an -O-O- unit (peroxo compounds) or an -N=N- unit (azo compound).

The peroxo compounds include hydrogen peroxide, peroxodisulphates, peroxodiphosphates, hydroperoxides, peracids, peracid esters, peracid anhydrides and peroxides having two organic radicals. Salts of peroxodisulphuric acid and of peroxodiphosphoric acid used may be sodium, potassium and ammonium salts. Suitable hydroperoxides are, for example, t-butyl hydroperoxide, cumene hydroperoxide, pinane hydroperoxide, and p-menthane hydroperoxide. Suitable peroxides having two organic radicals are dibenzoyl peroxide, bis-2,4-dichlorobenzoyl peroxide, di-t-butyl peroxide, dicumyl peroxide, t-butyl perbenzoate, t-butyl peracetate, etc.

Suitable azo compounds are azobisisobutyronitrile, azobisvaleronitrile and azobiscyclohexanenitrile.

Hydrogen peroxide, hydro peroxides, peracids, peracid esters, peroxodisulphate and peroxodisphosphate are also used in combination with reducing agents. Suitable reducing agents are sulphenates, sulphinates, sulphoxylates, dithionite, sulphite, metabisulphite, disulphite, sugar, urea, thiourea, xanthogenates, thioxanthogenates, hydrazinium salts, amines and amine derivatives such as aniline, dimethylaniline, monoethanolamine, diethanolamine or triethanolamine.

Initiator systems consisting of an oxidizing agent and a reducing agent are referred to as redox systems. When redox systems are employed, salts of transition metals such as iron, cobalt or nickel are frequently also used in combination with suitable complexing agents such as sodium ethylenediaminetetraacetate, sodium nitrilotriacetate and trisodium phosphate or tetrapotassium diphosphate.

Preferred redox systems are: 1) potassium peroxodisulphate in combination with triethanolamine, 2) ammonium peroxodiphosphate in combination with sodium metabisulphite ($Na_2S_2O_5$), 3) p-methane hydroperoxide/sodium formaldehydesulphoxylate in combination with Fe(II) sulphate ($FeSO_4$*7 $H_2O$), sodium ethylenediaminoacetate and trisodium phosphate, 4) cumene hydroperoxide/sodium formaldehydesulphoxylate in combination with Fe(II) sulphate ($FeSO_4$*7 $H_2O$), sodium ethylenediaminoacetate and tetrapotassium disphosphate.

The amount of oxidizing agent is from 0.001 to 1 part by weight per 100 parts by weight of monomer. The molar amount of reducing agent is in the range from 50% to 500%, based on the molar amount of the oxidizing agent used.

The molar amount of complexing agents is based on the amount of transition metal used and is usually equimolar with this.

To carry out the polymerization, all or individual components of the initiator system are introduced at the beginning of the polymerization or during the polymerization. The addition of all or individual components of the initiator system in portions during the polymerization is preferred. The sequential addition enables the reaction rate to be controlled.

Typically the polymerisation is carried out in the presence of molecular weight regulating agents which are often alkyl thiols with 7 to 16 C-atoms. Said alkyl thiols or isomeric mixtures of alkyl thiols are either commercially available or can be prepared according to procedures known to in the art.

The polymerization time is in the range from 5 hours to 15 hours and depends essentially on the acrylonitrile content of the monomer mixture and on the polymerization temperature.

The polymerization temperature is in the range from 0°C to 50°C, preferably in the range from 5°C to 55°C. and more preferably in the range from 8°C to 40°C.

After conversions in the range from 50% to 99%, preferably in the range from 65 to 98%, have been reached, the polymerization is stopped. For this purpose, a stopper is added to the reaction mixture.

Suitable stoppers are, for example, dimethyl dithiocarbamate, sodium nitrite, mixtures of dimethyl dithiocarbamate and sodium nitrite, hydrazine and hydroxylamine and also salts derived therefrom, e.g. hydrazinium sulphate and hydroxylammonium sulphate, diethylhydroxylamine, diisopropylhydroxylamine, water-soluble salts of hydroquinone, sodium dithionite, phenyl-ca-naphthylamine and aromatic phenols such as tert-butylcatechol or phenothiazine.

The amount of water used in the emulsion polymerization is in the range from 100 to 900 parts by weight, preferably in the range from 120 to 500 parts by weight, particularly preferably in the range from 150 to 400 parts by weight, of water per 100 pans by weight of the monomer mixture.

It is possible to add salts to the aqueous phase in the emulsion polymerization in order to reduce the viscosity during the polymerization, to adjust the pH and to buffer the pH. Salts usually used for this purpose are salts of monovalent metals in the form of potassium and sodium hydroxide, sodium sulphate, sodium carbonate, sodium hydrogencarbonate, lithium chloride, sodium chloride and potassium chloride. Preference is given to sodium and potassium hydroxide, sodium hydrogencarbonate, lithium, sodium and potassium chloride. The amounts of these electrolytes are in the range from 0 to 1 part by weight, preferably from 0 to 0.5 part by weight, per 100 parts by weight of the monomer mixture. The addition

of a chloride-containing salt during the emulsion polymerization is necessary when a chloride-containing salt is to be used neither in the following coagulation nor in the subsequent washing of the coagulated nitrile rubber (feature (iv) of the process of the invention).

The polymerization can be carried out either batch wise or continuously in a cascade of stirred vessels.

To achieve a uniform course of the polymerization, only part of the initiator system is used to start the polymerization and the remainder is fed in during the polymerization. The polymerization is usually started using from 10 to 80% by weight, preferably 30-50% by weight, of the total amount of initiator. The introduction of individual constituents of the initiator system after commencement of the polymerization is also possible.

If chemically uniform nitrile rubbers shall be produced, further acrylonitrile or butadiene is introduced when the composition goes outside the azeotropic butadiene/acrylonitrile ratio. (W. Hofmann, "Nitrilkautschuk", Berliner Union Stuttgart, S. 58ff). The further dosing is, as indicated, for example, in DD 154 702, preferably carried out under computer control on the basis of a computer program.

To remove unreacted monomers and volatile constituents, the stopped latex is subjected to a steam distillation. Here, temperatures in the range from 70°C to 150°C are employed, with the pressure being reduced at temperatures of <100°C.

Before removal of the volatile constituents, the latex can be after-stabilized by means of an emulsifier. For this purpose, it is advantageous to use the abovementioned emulsifiers in amounts of from 0.1 to 2.5% by weight, preferably from 0.5 to 2.0% by weight, per 100 parts by weight of nitrile rubber.

*Coagulation of the latex* - The coagulation is carried out using at least one salt selected from the group consisting of aluminium, calcium, magnesium, sodium, potassium, strontium and lithium salts.

As anions of these salts, it is usual to use monovalent or divalent anions. Preference is given to halide, particularly preferably chloride, nitrate, sulphate, hydrogencarbonate, carbonate, formate and acetate.

Examples of suitable salts, either with our without water of crystallization, are sodium chloride, potassium chloride, calcium chloride, magnesium chloride, lithium chloride, strontium chloride, sodium nitrate, potassium nitrate, sodium sulphate, potassium sulphate, sodium hydrogencarbonate, potassium hydrogencarbonate, sodium carbonate, potassium carbonate, aluminium sulphate, potassium aluminium sulphate (potassium alum), sodium aluminium sulphate (sodium alum), sodium acetate, calcium acetate and calcium formate. If a water-soluble calcium salt is used for the coagulation of the latex, calcium chloride is preferred.

The salts are used in an amount of from 0.05 to 10% by weight, preferably 0.5 to 8% by weight, more preferably 1 to 5% by weight based on the solid content of the nitrile rubber dispersion (i.e. the latex).

In addition to the at least one salt selected from the above-defined group, precipitation aids can also be used in the coagulation. Possible precipitation aids are, for example, water-soluble polymers. These are non-ionic, anionic or cationic.

Examples of non-ionic polymeric precipitation aids are modified cellulose such as hydroxyalkylcellulose or methylcellulose and also adducts of ethylene oxide and propylene oxide onto compounds having an acidic hydrogen. Examples of compounds having an acidic hydrogen are: fatty acids, sugars such as sorbitol, monoglycerides and diglycerides of fatty acids, phenol, alkylated phenols, and (alkyl)phenol-formaldehyde condensates. The addition products of ethylene oxide and propylene oxide onto these compounds can have a random or blocked structure. Among these products, preference is given to those whose solubility decreases with increasing temperature. Characteristic clouding temperatures are in the range from 0°C to 100°C, in particular in the range from 20°C to 70°C.

Examples of anionic polymeric precipitation aids are the homopolymers and copolymers of (meth)acrylic acid, maleic acid, and maleic anhydride. The sodium salt of polyacrylic acid is preferred.

Cationic polymeric precipitation aids are usually based on polyamines or on homopolymers and copolymers of (meth)acrylamide. Preference is given to polymethacrylamides and polyamines, in particular those based on epichlorohydrin and dimethylamine.

The amounts of polymeric precipitation aids are from 0.01 to 5 parts by weight, preferably from 0.05 to 2.5 parts by weight, per 100 parts by weight of nitrile rubber.

The use of other precipitation aids is also conceivable. However, it is readily possible to carry out the process in the absence of additional precipitation aids.

The latex used for the coagulation advantageously has a solids concentration in the range from 1% to 60%, preferably in the range from 5% to 55% and particularly preferably in the range from 15 to 50% by weight.

The coagulation of the latex is carried out in the temperature range from 10°C to 110°C, preferably of from 20°C to 100°C and more preferably of from 50°C to 98°C. The coagulation of the latex can be carried out continuously or batch wise.

In an alternative embodiment the latex which has been freed from unconverted monomers may be treated with acids at a pH value of ≤6, preferably ≤4 and more preferably ≤2 which results in the precipitation of the polymer. All mineral acids as well as organic acids may be used which allow to set the pH value in the above mentioned range. Mineral acids are preferably used. Subsequently the polymer is removed from the suspension according to known

procedures which may be done either batch wise or continuously.

After the coagulation, the nitrile rubber copolymer is usually present in the form of crumb. The washing of the coagulated NBR is therefore also referred to as crumb washing. It is possible to use either deionized water (also termed DW) or water which has not been deionized (also termed BW) for washing this coagulated crumb. Washing is carried out at a temperature in the range from 15°C to 90°C, preferably at a temperature in the range from 20°C to 80°C. The amount of washing water is from 0.5 to 20 parts by weight, preferably from 1 to 10 parts by weight and particularly preferably from 1 to 5 parts by weight, per 100 parts by weight of nitrile rubber.

The rubber crumb is preferably subjected to multistage washing, with the rubber crumb being partially dewatered between the individual washing stages. The residual moisture contents of the crumb between the individual washing stages are in the range from 5 to 50% by weight, preferably in the range from 7 to 25% by weight. The number of washing stages is usually from 1 to 7, preferably from 1 to 3. Washing is carried out batch wise or continuously. Preference is given to using a multistage, continuous process, with countercurrent washing being preferred in order to save water. After washing is complete, it has been found to be useful to dewater the nitrile rubber crumb. Drying of the nitrile rubber which has been subjected to preliminary dewatering is carried out in a fluidized-bed dryer or in a plate dryer. The temperatures during drying are in the range from 80°C to 150°C. Preference is given to drying according to a temperature programme, with the temperature being reduced towards the end of the drying process.

*Metathesis and Hydrogenation* - It is also possible that the preparation of the epoxy group-containing nitrile rubber copolymer (b) is followed by a metathesis reaction to reduce the molecular weight of the nitrile rubber or a metathesis reaction and a subsequent hydrogenation or only a hydrogenation. These metathesis or hydrogenation reactions are sufficiently well-known to those skilled in the art and are described in the literature. Metathesis is known, for example, from WO-A-02/100941 and WO-A-02/100905 and can be used to reduce the molecular weight.

The hydrogenation can be performed using homogeneous or heterogeneous hydrogenation catalysts. The catalysts used are based typically on rhodium, ruthenium or titanium, but it is also possible to use platinum, iridium, palladium, rhenium, ruthenium, osmium, cobalt or copper, either as the metal or else preferably in the form of metal compounds (see, for example, US3,700,637, DE-A-25 39 132, EP-A-0 134 023, DE-A-35 41 689, DE-A-35 40 918, EP-A-0 298 386, DE-A-35 29 252, DE-A-34 33 392, US4,464,515 and US4,503,196).

Suitable catalysts and solvents for a hydrogenation in homogeneous phase are described hereinafter and are also known from DE-A-25 39 132 and EP-A-0 471 250. The selective hydrogenation can be achieved, for example, in the presence of a rhodium or ruthenium catalyst.

Preferred catalysts are rhodium or ruthenium based, preferably (1,3-Bis-(2,4,6-trimethylphenyl)-2-imidazolidinylidene)dichloro(o-isopropoxyphenylmethylene)ruthenium, tris(triphenylphosphine)rhodium(I) chloride, tris(triphenylphosphine)rhodium(III) chloride and tris(dimethyl sulphoxide)rhodium(III) chloride, and also tetrakis(triphenylphosphine)rhodium hydride of the formula $(C_6H_5)_3P)_4RhH$ and the corresponding compounds in which the triphenylphosphine has been replaced fully or partially by tricyclohexylphosphine. The catalyst can be used in small amounts. An amount in the range of 0.01 to 1% by weight, preferably in the range of 0.03 to 0.5% by weight and more preferably in the range of 0.1 to 0.3% by weight, based on the weight of the polymer, is suitable.

It is typically advisable to use the catalyst together with a co-catalyst. Examples of cocatalysts can be found, for example, in US4,631,315. A preferred co-catalyst is triphenylphosphine. The co-catalyst is used preferably in amounts within a range of 0.3 to 5% by weight, preferably in the range of 0.5 to 4% by weight, based on the weight of the nitrile rubber to be hydrogenated. Preferably, in addition, the weight ratio of the rhodium catalyst to the co-catalyst is in the range from 1:3 to 1:55, more preferably in the range from 1:5 to 1:45, based on 100 parts by weight of the nitrile rubber to be hydrogenated; preferably 0.1 to 33 parts by weight of the co-catalyst, more preferably 0.5 to 20 and even more preferably 1 to 5 parts by weight, especially more than 2 but less than 5 parts by weight, based on 100 parts by weight of the nitrile rubber to be hydrogenated, are used.

The practical conduct of the hydrogenation is known to those skilled in the art from US6,683,136. It is effected typically by contacting the nitrile rubber to be hydrogenated with hydrogen in a solvent such as toluene or monochlorobenzene at a temperature in the range from 100°C to 150°C. and a pressure in the range from 50 bar to 150 bar for 2 hours to 10 hours.

Hydrogenation is understood in the context of this invention to mean a conversion of the double bonds present in the starting nitrile rubber to an extent of at least 50%, preferably 70% to 100%, more preferably 80 to 100%. The determination of the degree of hydrogenation is well-known to those skilled in the art and can be effected, for example, by Raman or IR spectroscopy (see, for example, EP-A-0 897 933 for the determination by Raman spectroscopy or US6,522,408 for the determination via IR spectroscopy).

In the case of use of heterogeneous catalysts, these are typically supported catalysts based on palladium, which are supported, for example, on charcoal, silica, Calcium carbonate or barium sulphate.

The inventive epoxy group-containing nitrile rubber copolymers have Mooney viscosities (ML 1+4@100°C) in the range from 10 to 160, preferably from 15 to 150 Mooney units, more preferably from 20 to 150 Mooney units and especially 25 to 145 Mooney units. The values of the Mooney viscosity (ML 1+4@100°C) are determined by means of

a shearing disc viscometer to ISO 289 (ISO 289-1:2014-02) at 100°C.

The epoxy group-containing fluorine-free copolymer used according to the invention customarily have Mooney viscosities (ML(1+4) 100°C) $\geq$ 5 Mooney units (MU), preferably $\geq$ 7 Mooney units, particularly preferably $\geq$ 10 Mooney units. The Mooney viscosity values (ML(1+4) 100°C) are determined by means of a shearing disc viscometer according to ISO 289 (ISO 289-1:2014-02) at 100°C.

The glass transition temperatures of the epoxy group-containing fluorine-free copolymer are in the range from +40°C to -50°C, preferably in the range from +35°C to -45°C and particularly preferably in the range from +35°C to -40°C measured by DSC with a heating rate of 20K/min.

In a preferred embodiment, the epoxy group-containing fluorine-free copolymer is present in the electrode composition in an amount of 0.1 to 15% by weight, preferably 0.25 to 10% by weight, more preferably 0.5 to 7.5% by weight based on the total weight of the electrode composition.

In one aspect of the invention, the inventive epoxy group-containing fluorine-free copolymer, preferably the epoxy group-containing ethylene-vinyl acetate copolymer (a) or the epoxy group-containing nitrile rubber copolymer (b), is used as a binder in an electrode composition for a cathode of a cell of a battery.

The epoxy group-containing fluorine-free copolymer may be preferably present in a binder solution in an amount of 0.1 to 30% by weight, more preferably in a concentration of 0.25 to 20% by weight and most preferably in a concentration of 0.5 to 15% by weight based on the total weight of the binder solution.

In a preferred embodiment of the invention, the copolymer binder consists of epoxy group-containing ethylene-vinyl acetate copolymer or epoxy group-containing nitrile rubber copolymer and no further polymer is present.

In an alternative embodiment, the electrode composition comprises epoxy group-containing fluorine-free copolymer and at least one styrene butadiene rubber, nitrile butadiene rubber, hydrogenated nitrile butadiene rubber, acrylonitrile acrylic acid copolymer, polyacrylonitrile, polyvinyl chloride, polyethylene imine, polymethyl methacrylate, polybutyl acrylate, polyvinylpyrrolidone, polyvinylacetate, ethylene-vinyl acetate copolymer, polyarylate, poly-p-phenylene terephthalamide or a mixture thereof.

*Cathode slurry composition* - A further aspect of the invention is a cathode slurry composition for the secondary battery comprising an electrode composition according to this invention comprising at least one cathode active material (i), at least one epoxy group-containing, fluorine-free copolymer (ii), at least one conductive material, at least one solvent and optionally a dispersant or further additives. Hereinafter, the embodiment of using the cathode slurry composition as the cathode slurry composition for the lithium-ion battery will be explained.

In a preferred embodiment, the copolymer is the epoxy group-containing fluorine-free polymer according to this invention, whereas the epoxy group-containing fluorine-free polymer, such as an epoxy group-containing ethylene-vinyl acetate copolymer or epoxy group-containing acrylonitrile butadiene copolymer or a mixture thereof, is dissolved in a solvent in the binder solution in an amount of 0.1 to 30% by weight, more preferably in a concentration of 0.25 to 20% by weight and most preferably in a concentration of 0.5 to 15% by weight based on the total weight of the binder solution and is present in the cathode slurry composition in an amount of 0.1 to 15% by weight, preferably 0.25 to 10% by weight, more preferably 0.5 to 7.5% by weight based on the total weight of the electrode composition.

*Conductive material* - The cathode slurry composition comprises at least one electrically conductive material (in the following named as "conductive material"). Preferred conductive materials are selected from the group consisting of carbon black, acetylene black, Ketjen black, channel black, furnace black, lamp black and summer black, natural and artificial graphite, expanded graphite, conductive fibres such as carbon fibre and metal fibre, metal powders such as carbon fluoride, aluminium and nickel powder, and carbon nanotube, graphene, graphene oxide and their mixtures. By comprising the conductive material, the electrical connection of the cathode active materials (i) can be improved, and the discharge rate characteristic can be improved.

In a preferred embodiment, the conductive material is present in the cathode slurry composition in an amount of 0.5 to 50% by weight based on the total solid weight of the cathode slurry composition.

*Solvent* - The cathode slurry composition comprises at least one solvent. The solvent is not particularly limited as long as the copolymer can be dispersed or dissolved uniformly, and water or organic solvent can be used. The organic solvent may comprise cyclic aliphatic hydrocarbons such as cyclopentane and cyclohexane; aromatic hydrocarbons such as chlorobenzene, toluene, xylene and cyclobenzene; ketones such as acetone, methyl ethyl ketone, diisopropyl ketone, cyclohexanone, methylcyclohexane, ethylcyclohexane; chlorine based aliphatic hydrocarbons such as methylene chloride, chloroform, and carbon tetrachloride; esters such as ethyl acetate, butyl acetate, $\gamma$-butyrolactone, $\varepsilon$-caprolactone; acylonitriles such as acetonitrile or propionitrile; ethers such as tetrahydrofurane or ethyleneglycoldiethylether; alcohols such as tert-butanol, glycerol, methanol, ethanol, isopropanol, ethyleneglycol, triethyleneglycol or ethyleneglycolmonomethylether; sulfones such as diethyl sulfone, ethyl methyl sulfone or tetramethylene sulfone, nitriles such as malononitrile or succinonitril, amides such as N-methylpyrrolidone (NMP), N-formylmorpholine and N,N-dimethylformamide may be mentioned. Preferred solvents are methyl ethyl ketone, toluene and N-methylpyrrolidone. Particularly preferred is N-methylpyrrolidone.

*Method for producing the cathode slurry composition* - The production method of the cathode slurry composition

used in the present invention is not particularly limited, and it is produced by mixing the above mentioned binder solution with the cathode active material (i), the conductive material and optionally further additives. Alternatively but not limiting the copolymer is mixed first with cathode active material (i), the conductive material and optionally further additives before the solvent is added.

The mixing device is not particularly limited as long as the binder solution, the cathode active material (i) and the conductive material can be mixed uniformly; and for example the method of using the mixing device such as the stirring type, the shaking type, and the rotating type may be mentioned. Also, the method using the dispersing kneader such as homogenizer, ball mill, sand mill, roll mill, a planetary kneader such as planetary mixer or an extruder may be mentioned.

*Cathode (positive electrode)* - The cathode of the secondary battery of the present invention comprises a current collector, and a cathode active material layer. The cathode active material layer comprises the inventive electrode composition, the conductive material and optionally other components which are added depending on the needs may be comprised as well. The cathode active material layer is formed on said current collector.

*Current collector* - The current collector is not particularly limited if this is a material having electric conductivity and electrochemical durability. Preferably, in view of the heat resistance, the current collector is selected from a group consisting of iron, copper, aluminium, nickel, sintered carbon, stainless steel, stainless steel treated with carbon, titanium, tantalum, gold, platinum, titanium or silver on the surface thereof; an aluminium-cadmium alloy, a non-conductive polymer treated with a conductive material on the surface thereof; a conductive polymer or a metal paste comprising metal powders of Ni, Al, Au, Ag, Pd, Cr, Ta, Cu or Ba. Among these, aluminium is particularly preferable for current collector of cathode. The current collector may be formed in various forms such as a film, a sheet, a foil, a net, a porous body, a foam or a nonwoven fabric. The shape of the current collector is not particularly limited, and the sheet form current collector having a thickness of about 0.001 to 0.5 mm is preferable, more preferable 3 to 500 $\mu$m. It is preferable that the current collector is subject to a roughening treatment in advance before the use, in order to increase the adhering strength with the cathode active material layer. Method of the roughening treatment may include mechanical polishing method, electropolishing method, chemical polishing method, etc. In the mechanical polishing cathode, a coated abrasive cathode in which abrasive particles are fixed, a grinding stone, an emery buff or a wire-brush provided with steel wire can be used. Also, an intermediate or primer coating layer may be formed on the surface of the current collector to increase the adhering strength and conductivity between the cathode active material layer and the current collector.

*Process for manufacturing a cathode* - The invention further relates to a process for manufacturing a cathode such as defined above, characterized in that it comprises the following steps of:

(1) dissolving the epoxy group-containing fluorine-free copolymer (ii) in a solvent to form a binder solution; and

(2) mixing the binder solution from step (1) with the cathode active material (i), a conductive material and optionally further additives to form a cathode slurry composition,

(3) applying the cathode slurry composition from step (2) onto a current collector to form a cathode sheet; and

(4) drying the cathode sheet of step (3).

In an alternative embodiment, the epoxy group-containing fluorine-free copolymer (ii), the cathode active material (i), a conductive material and optionally further additives of step (1) and (2) are mixed first before a solvent is added. In a preferred embodiment the epoxy group-containing fluorine-free copolymer is dissolved first in a solvent according to step (1).

In a preferred embodiment of this invention, but not limiting, step (1) may be carried out by dissolving the epoxy group-containing fluorine-free copolymer in a shaker over night at room temperature. In a preferred embodiment of this invention, the binder solution formed in step (1) has a concentration of 0.1 to 30% by weight, preferably 0.25 to 20% by weight and more preferably 0.5 to 15% by weight based on the total weight of the binder solution.

In a preferred embodiment of this invention, but not limiting, step (2) may be carried out in a ball mill including dry ball-milling, wet ball-milling planetary ball milling.

In a preferred embodiment of this invention, but not limiting, step (3) may be carried out with a bar coater or doctor blade more preferably with a bar coater with a slit gap of 50 to 750 $\mu$m.

In a preferred embodiment of this invention, step (4) may be carried out in an oven, more preferably at a temperature of 50°C to 200°C, even more preferably 50°C to 150°C.

In a preferred embodiment, but not limiting, the cathode sheet is calendered to adjust the areal density after the drying step (4).

The cathodes are punched from the calandered cathode sheet.

*Lithium-ion battery* - The invention further relates to a lithium-ion battery comprising one or more cell comprising

the cathode of this invention. A lithium-ion battery according to the invention comprises at least one cell comprising an anode, a cathode such as defined above, a separator and an electrolytic solution based on a lithium salt and on an organic solvent.

*Electrolytic solution* - As the electrolytic solution for the lithium-ion battery, an organic electrolytic solution can be used wherein the supporting electrolyte is dissolved in an organic solvent.

As the supporting electrolyte, a lithium salt may be used. The lithium salt is not particularly limited, and for example, $LiNO_3$, LiCl, LiBr, LiI, $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, $(C_2F_5SO_2)NLi$, lithium chloroborate, lithium tetraphenylborate and the like may be used. Among these, $LiPF_6$, $LiClO_4$, $CF_3SO_3Li$ are preferable since these are easily dissolved in the organic solvent and show a high degree of dissociation. Two or more thereof can be used together. If the supporting electrolytes have a higher dissociation degree, the lithium-ion conductivity becomes higher, thus the lithium-ion conductivity can be regulated by the type of the supporting electrolyte.

The organic solvent used for the electrolytic solution for the lithium-ion battery is not particularly limited as long as the supporting electrolytes can be dissolved. Carbonates such as dimethyl carbonate (DMC), ethylene carbonate (EC), diethyl carbonate (DEC), propylene carbonate (PC), butylene carbonate (BC), fluoroethylene carbonate (FEC) or methyl ethyl carbonate (MEC); esters such as $\gamma$-butyrolactone or methyl formate; ethers such as 1,2-dimethoxy ethane and tetrahydrofuran; sulphur-containing compounds such as sulfolane and dimethyl sulfoxide may or used. The mixed solvent thereof may be used as well. Among these, the carbonates are preferable as it has high dielectric constant, and the stable electric potential is wide. The lower the viscosity of the used solvent is, the higher the lithium-ion conductivity is; thus the lithium-ion conductivity can be regulated by the type of the solvent.

Further additives can be added to the electrolytic solution. Carbonates such as vinylene carbonate (VC) are preferable as additive.

For the purpose of improving the charge/discharge characteristics and the flame retardancy, the electrolytic solution may contain at least one additive selected from the group consisting of pyridine, triethylphosphite, triethanolamine, cyclic ether, ethylenediamine, diglyme, benzene derivatives, sulphur, N-substituted oxazolidinones, N,N-substituted imidazolidines, ethylene glycol dialkyl ethers, ammonium salts, pyrrole or 2-methoxyethanol.

The concentration of the supporting electrolyte in the electrolytic solution for the lithium-ion battery is typically 0.01 to 30% by weight, preferably 0.05 to 20% by weight, particularly preferably 0.1 to 15% by weight based on the total weight of the electrolytic solution. The ion conductivity tends to decline in case the concentration of the supporting electrolyte is too low or too high.

*Separator* - As separator for the lithium-ion battery known separators such as fine porous films or nonwoven fabrics comprising aromatic polyamide resins or the polyolefin based polymers, such as polyethylene or polypropylene; may be used. For example, the fine porous film formed by the resin such as polyolefin type polymer (polyethylene, polypropylene, polybutene, ethylene-butene copolymers, ethylene-hexene copolymers, ethylene-methacrylate copolymers and polyvinyl chloride) and the mixture or the copolymer thereof; the fine porous film consisting of polyethylene terephthalate, polyesters, polyacetals, polyamides, polycarbonates, polyether ether ketones, polyether sulfones, polyphenylene oxides, polyphenylene sulfides polycycloolefin, polyether sulfone, polyamide, polyimide, polyimideamide, polyaramid, polycycloolefin, nylon or polytetrafuluoro ethylene, the woven fabric wherein the polyolefin type fiber are woven or the non-woven fabric thereof, and the aggregate of the insulating material particles may be mentioned. The separator may consit as well of a porous substrate made of a mixture of inorganic particles and a polymer; or a separator having a porous coating layer formed on at least one surface of the porous polymersubstrate and comprising inorganic particles and a binder polymer. Among these, the fine porous film formed by the polyolefin type polymers is preferable since the thickness of the separator as a whole can be made thinner and the capacity per volume can be increased by increasing the active material ratio in the battery.

The thickness of the separator is typically 0.01 to 300 $\mu$m, preferably 1 to 100 $\mu$m, and more preferably 1 to 40 $\mu$m. When it is within this range, the resistance of the separator in the battery becomes smaller, and the processing while forming the battery is superior.

In some cases, a gel polymer electrolyte may be coated on the separator to increase the stability of the cell. Representative examples of such a gel polymer include polyethylene oxide, polyvinylidene fluoride, and polyacrylonitrile.

*Anode (negative electrode)* - The anode active material layer selectively comprise a binder and a conductive agent in addition to the anode active material. The anode active material layer may be prepared by coating a composition for forming an anode, which selectively comprises the binder and the conductive agent as well as the anode active material, on the negative electrode collector and drying the coated anode collector, or may be prepared by casting the composition for forming an anode on a separate support and then laminating a film separated from the support on the anode collector. As the current collector, those mentioned in the cathode of the lithium-ion battery can be mentioned, and it is not particularly limited as long as it is a material having the electric conductivity and the electrochemical durability; however copper is preferable as the anode of the lithium-ion battery.

*Anode active material* - As the anode active material for the lithium-ion battery anode, for example carbon

materials such as amorphous carbon, natural graphite, artificial graphite, natural black lead, mesocarbon micro-bead and pitch-based carbon fibre, conductive polymer such as polyacene or polyaniline may be mentioned. Also, as the anode active material, a metal such as silicon, tin, zinc, manganese, iron and nickel, the alloy thereof, oxide and sulphate salt of the above metal or alloy can be used. In addition, metals including Si, Na, Al, Sn, Li, Zn, Mg, Cd, Ce, Ni and Fe, alloys of the metals; oxides of the metals such as $LiCoO_2$, $LiNiO_2$, $LiMn_2O_4$, $MnO_2$, $FeO_2$, $V_2O_5$, $TiO_2$, $Li_xNi_{0,5}Mn_{1.5}O_4$, $Li_xMn_{0,5}Ni_{0,5}O_2$, metal hydroxides, metal sulphides such as $LiVS_2$, $LiTiS_2$, $VS_2$ or $TiS_2$,, phosphates of the metals such as $LiCoPO_4$, $Li_3V_2PO_4$, $LiTi_2(PO_4)_3$, $LiFePO_4$, thiophosphates such as $LiTi_2(PS_4)_3$, composites of the metals and carbon materials as mentioned above; and a mixture thereof, lithium, lithium alloy such as $LiC_6$, $Li_{13}Sn_5$, $Li_9Al_4$, $Li_{22}Si_5$, or nitride of lithium-transition metal can be used as well. As the anode active material, those adhered with the conductivity supplying material on the surface by the surface mechanical modified method can be used as well.

The content ratio of the anode active material of the anode active material layer is preferably 85 to 99.9% by weight, and more preferably 90 to 99.75% by weight based on the total weight of the anode active material layer. If for the anode active material metals such as Si, Na, Al, Sn, Li, Zn, Mg, Cd, Ce, Ni or Fe are used, the content can be up to 100%. By having the content ratio of the anode active material within said range, it can exhibit flexibility and the binding property while showing high capacity.

Also, in the anode for the lithium-ion battery, besides the above mentioned component, the solvent used in the cathode of aforementioned, or the electrolytic solution additives which has function to suppress the electrolytic solution decomposition may be included. These may not be particularly limited, as long as it does not influence the battery reaction.

*Anode binder* - As the binder for the lithium-ion battery anode, known material can be used without any particular limitation. Examples for such binders for the lithium-ion battery include polyethylene, polytetrafluoroethylene (PTFE), polyvinylidene fluoride (PVDF), tetrafluoroethylene-hexafluoropropylene copolymer (FEP), polyacrylic acid, polyvinyl alcohol, carboxymethylcellulose (CMC), starch, lignin, hydroxypropylcellulose, regenerated cellulose, polyvinylpyrrolidone, polyvinyl alcohol, polyamide imide, polypropylene, ethylene-propylene-diene polymer (EPDM), sulfonated EPDM, styrene butadiene rubber, nitrile rubber, fluorine rubber derivative or polyacrylonitrile derivative; soft polymers such as acrylic based soft polymer. These may be used alone or by combining two or more thereof.

The negative electrode for the lithium-ion battery can be produced as same as the aforementioned positive electrode.

*Process for producing a lithium-ion battery* - As the specific production method of the lithium-ion battery, the cathode and the anode mentioned in above may be layered via the separator, which is then winded or bended depending on the battery shape to fit in the battery case, followed by filling the electrolyte in the battery case and sealing the case.

Also, as needed, it is possible to prevent pressure increase inside the battery and overcharge-overdischarge by setting in expanded metal such as a nickel sponge, overcurrent protection element such as fuse and PTC element, and lead plate, etc. The shape of the battery may include coin shape, button shape, sheet shape, cylinder shape, square shape and flattened shape.

The present invention is demonstrated by the following non-limiting examples.

The following materials and source of the materials were used.

| Materials | Abbreviation/Trade name & Source |
|---|---|
| Lithium-nickel-cobalt-manganese-oxide | Active material; NMC (3/3/3 type 8.0 to 13.0 μm; Jining WuJie Sci. Tech Co., Ltd |
| Epoxy group-containing hydrogenated acrylonitrile butadiene copolymer, copolymer A | Fully hydrogenated epoxy containing butadiene acrylonitrile copolymer with less than 1% residual double-bonds, (ACN content 39 wt.-%); Mooney viscosity ML(1+4) 100°C = 90 MU |
| Hydrogenated acrylonitrile butadiene copolymer Therban® 3907, copolymer D | Fully hydrogenated butadiene acrylonitrile copolymer with less than 1% residual double-bonds, (ACN content 39±1.5 wt.-%); Mooney viscosity ML(1+4) 100°C = 70±7 MU. |
| Epoxy group-containing ethylene-vinyl acetate copolymer, copolymer B | Ethylene-vinyl acetate-glycidyl methacrylate terpolymer (EVM-GMA) (VA content 60±8wt.-%); 3 wt.-% glycidyl methacrylate; Mooney viscosity ML (1+4) 100°C = 30±15 MU; volatile matter ≤ 0.6; total ash ≤ 0.8 |
| Epoxy group-containing ethylene-vinyl acetate copolymer, copolymer C | Ethylene-vinyl acetate-glycidyl methacrylate terpolymer (EVM-GMA) (VA content 60±8wt.-%); 9 wt.-% glycidyl methacrylate; Mooney viscosity ML (1+4) 100°C = 30±15 MU; volatile matter ≤ 0.6; total ash ≤ 0.8 |

(continued)

| Materials | Abbreviation/Trade name & Source |
|---|---|
| Levapren® 600, EVM 600, copolymer E | Ethylene-vinyl acetate copolymer (VA content 60±1.5 wt.-%); Mooney viscosity ML(1+4) 100°C = 27±4 MU; volatile matter ≤ 0.6; total ash ≤ 0.8; ARLANXEO |
| Levapren® 700, EVM 700, copolymer F | Ethylene-vinyl acetate copolymer (VA content 70±1.5 wt.-%); Mooney viscosity ML(1+4) 100°C = 27±4 MU; volatile matter ≤ 0.6; total ash ≤ 0.8; ARLANXEO |
| Levapren® 800, EVM 800, copolymer G | Ethylene-vinyl acetate copolymer (VA content 80±2.0 wt.-%); Mooney viscosity ML(1+4) 100°C = 28±6 MU; volatile matter ≤ 0.6; total ash ≤ 0.8; ARLANXEO |
| Levapren® 900, EVM 900, copolymer H | Ethylene-vinyl acetate copolymer (VA content 90±2.0 wt.-%); Mooney viscosity ML(1+4) 100°C = 38±6 MU; volatile matter ≤ 0.6; total ash ≤ 0.8; ARLANXEO |
| Conductive carbon black | Conductive material; Super P; TIMCAL company |
| Aluminum foil | Current collector; Thickness 20 μm; China Aluminium Shanxi New Material Co. |
| N-methyl pyrrolidone (NMP) | Solvent; 99.9% battery grade; Shandong YunChangXin Chemical Tech. Co. |
| Lithium disc | Anode; ø 16 mm; China Energy Lithium Co., Ltd |
| Porous polyolefin film | Separator; Celgard 2340, thickness 38 μm, punched into ø 18 mm disc; Celgard |
| $LiPF_6$ | Electrolytic solution: 1 M in EC/DEC mixture, EC/DEC=50/50 (v/v); Aldrich |
| Ethylene carbonate (EC) | Organic solvent used for the electrolytic solution: 98%, Aladdin Industrial Corporation |
| Diethyl carbonate (DEC) | Organic solvent used for the electrolytic solution: CP grade, 99.0%, Shanghai Ning Feng Chemical Reagent Co. |
| Coin cell | Casing; 2032 type; ShanXi LiZhiYuan Battery Material Co. |
| Nickel sponge | Thickness: 1 mm each layer. for each coin cell 4 layers was used; Changsha LiYuan New Material Co. |
| 3M tape | vinyl electrical tape, produced by 3M China Company; width of the tape: 17.5 mm. |

Test methods

*Mooney viscosity* - The values of the Mooney viscosity (ML 1+4@100°C) are determined in each case by means of a shearing disc viscometer to DIN 53523/3 or ASTM D 1646 at 100°C. The MSR (Mooney Stress Relaxation) is determined in each case by means of a shearing disc viscometer to ISO 289-4:2003(E) at 100°C.

*NMR* - The microstructure and the termonomer content of the individual polymers are determined by means of 1H NMR (instrument: Bruker DPX400 with XWIN-NMR 3.1 software, measurement frequency 400 MHz, solvent $CDCl_3$).

*Passage conductivity* - To measure the passage conductivity, the samples are pressed in a high temperature press at 120°C to a film having a thickness of about 0.5 mm and then applied with a voltage of 1000 V over a period of 5 minutes according to ASTM D257. The passage conductivity is determined taking into account the layer thickness from the measurement.

*Method of evaluating peel strength* - The evaluation of the peel strength was performed according to ASTM D903. The cathode sheet was cut into test strips with a width of 25 mm and 175 mm length. 3M vinyl electrical tape was bonded onto the coated cathode active material surface of the cathode sheet. The peel test was carried out on the test strip through an Instron tensile machine peeling the tape in a 180° direction with 100 mm/min. The peel force was recorded during the test. The peel strength was calculated according to the following formula:

$$Peel\ strength\ [N/m] = \frac{Peel\ force\ [Newtons]}{Width\ [0.0175\ m]}$$

The average peel strength was calculated basing on the data among 50-200 mm displacement and the average of three measurements was taken as peel strength value.

*Method of evaluating discharging specific capacity* - The produced secondary battery was charged at 0.2 C rate at 23°C until the battery voltage reached 4.2 V. Subsequently after 20 minutes, at 23°C, a constant current discharge was performed at 0.2 C rate until the battery voltage reached 2.75 V. The coin cell secondary battery was charged and discharged thereafter in constant current mode (CC mode 0.2 C rate). Between every cycle, there the cell is rested for 5 min. The discharging specific capacity of the secondary battery was calculated as the average value between 2 and 5 cycles.

*Method of evaluating capacity retention* - The coin cell secondary battery was charged and discharged in constant current mode (CC mode 0.2 C rate) for 30 cycles. Capacity retention was determined as the ratio of the discharge specific capacity after 30 cycles over the discharge specific capacity after the second cycle in percent. Then, the capacity retention was calculated and evaluated based on the following criteria.

A: Capacity retention is 95% or more

B: Capacity retention is 85% or more and less than 95%

C: Capacity retention is 75% or more and less than 85%

D: Capacity retention is less than 75%

<u>Preparation of inventive copolymers</u>

*Preparation of epoxy group-containing fully hydrogenated acrylonitrile butadiene copolymer A*

Epoxy group-containing fully hydrogenated acrylonitrile butadiene copolymer A used as binder in the example series which follow was produced according to the base formulation specified in Table 1, with all feedstocks stated in parts by weight based on 100 parts by weight of the monomer mixture. Table 1 also specifies the respective polymerization conditions.

Acrylonitrile butadiene rubber copolymer was produced batchwise in a 5 L autoclave with stirrer system. In each of the autoclave batch, 1.25 kg of the monomer mixture and a total amount of water of 2.1 kg was used, as was EDTA in an equimolar amount based on the Fe(II). 1.9 kg of this amount of water were initially charged with the emulsifier in the autoclave and purged with a nitrogen stream. Thereafter, the destabilized monomers and the amount of the t-DDM molecular weight regulator specified in Table 1 were added and the reactor was closed. After the reactor contents had been brought to temperature, the polymerizations was started by the addition of the $Fe(II)SO_4$ premix solution and of para-menthane hydroperoxide (Trigonox® NT50). The course of the polymerization was monitored by gravimetric determinations of conversion. On attainment of the conversions reported in Table 1, the polymerization was stopped by adding an aqueous solution of diethylhydroxylamine. Unconverted monomers and other volatile constituents were removed by means of steam distillation.

A 50% dispersion of the antixoxidant were mixed with a dispersion of the acrylonitrile butadiene rubber copolymer having a solid content of 17.5 % by weight. Afterwards the resulting dispersion comprising the acrylonitrile butadiene rubber copolymer and the antioxidant have been added slowly and under vigorous stirring to an aqueous solution of calcium chloride having a concentration of 0.4 % by weight at 55°C. The stabilized acrylonitrile butadiene copolymer coagulated, is washed with water and dried for 16 hours at 60°C in a vacuum oven.

After hydrogenation with a standard Ru-based hydrogenation catalyst, the hydrogenated acrylonitrile butadiene copolymer A obtained had the properties reported in Table 2. The spectrum of acrylonitrile butadiene rubber copolymer before, during and after the hydrogenation reaction was recorded on a Perkin Elmer spectrum 100 FT-IR spectrometer. The solution of the acrylonitrile butadiene rubber copolymer in chlorbenzene was cast onto a KBr disk and dried to form a film for the test. The hydrogenation conversion is determined by the FT-IR analysis according to the ASTM D 5670-95 method.

Subsequently the Mooney-viscosity is determined as described above.

Table 1: Preparation of epoxy group-containing fully hydrogenated acrylonitrile butadiene rubber copolymer A

| Copolymer | A phm |
|---|---|
| Butadiene | 43.2 |
| Acrylonitrile | 51.8 |
| Glycidyl methacrylate (GMA) | 5.0 |
| Water | 200 |
| Fatty acid | 2.16 |
| Rosin acid | 0.25 |
| KCl | 0.13 |
| pH | 10.5±0.5 |
| t-DDM | 0.77 |
| Trigonox® NT 50 | 0.02 |
| Prämix Lösung $Fe(II)SO_4$ | 0.01 |
| Diethylhydroxylamin | 0.2 |
| Polymerization temperature [°C] | 12.5±0.5 |
| Conversion [%] | 74 |

*Preparation of epoxy group-containing ethylene-vinyl acetate copolymer*

Epoxy group-containing ethylene-vinyl acetate copolymers B and C were prepared according the following procedure:

*Copolymer B*

The preparation was carried out in a 5 L stirred autoclave. For this purpose, 1983 g of a solution consisting of 693 g of tert-butanol, 1288 g of vinyl acetate, 2.0 g of glycidyl methacrylate and 252.5 g of an activator solution consisting of 2.5 g of ADVN and 250 g of vinyl acetate/tert-butanol solution (vinyl acetate 20%) were drawn one after another into the 5 L reactor at RT. The reactor was inertized with nitrogen and then 1062 g of ethylene were injected. The temperature was raised to 61°C, establishing a pressure of approximately 380 bar. After half an hour, at which point the conversion was about 10 wt.-%, based on the vinyl acetate, a solution consisting of 122.2 g of tert-butanol, 143.8 g of vinyl acetate and 40.0 g of glycidyl methacrylate was metered into the reaction mixture at a rate of 0.6 g/min. Throughout the whole reaction period, the pressure was maintained at ca, 380 bar by injection of ethylene. After a reaction time of 10 hours, the metering of ethylene was concluded and the polymer solution was expressed from the 5 L reactor into a stopping autoclave. After removal of the solvent and the residual monomers glycidyl methacrylate-ethylene-vinyl acetate copolymer was obtained having a residual glycidyl methacrylate content of less than 100 mg/kg.

*Copolymer C*

The preparation was carried out in a 5 L stirred autoclave. For this purpose, 1665 g of a solution consisting of 564 g of tert-butanol, 1096 g of vinyl acetate, 5.0 g of glycidyl methacrylate and 252.5 g of an activator solution consisting of 2.5 g of ADVN and 250 g of vinyl acetate/tert-butanol solution (vinyl acetate 20%) were drawn one after another into the 5 L reactor at RT. The reactor was inertized with nitrogen and then 1178 g of ethylene were injected. The temperature was raised to 61°C, establishing a pressure of approximately 380 bar. After half an hour, at which point the conversion was about 10 wt.-%, based on the vinyl acetate, a solution consisting of 122.2 g of tert-butanol, 101.8 g of vinyl acetate and 82.0 g of glycidyl methacrylate was metered into the reaction mixture at a rate of 0.6 g/min. Throughout the whole reaction period, the pressure was maintained at ca, 380 bar by injection of ethylene. After a reaction time of 10 hours, the metering of ethylene was concluded and the polymer solution was expressed from the 5 L reactor into a stopping autoclave. After removal of the solvent and the residual monomers glycidyl methacrylate-ethylene-vinyl acetate copolymer was obtained having a residual glycidyl methacrylate content of less than 100 mg/kg.

The dried epoxy group-containing copolymers A, B and C were characterized by the Mooney viscosity and their monomer composition. The copolymers obtained had the properties reported in Table 2.

Table 2: Properties of epoxy containing copolymers A, B and C

| Copolymer | A | B | C |
|---|---|---|---|
| ACN content [wt.-%] | 39 | - | - |
| Ethylene content [wt.-%] | 58 | 40 | 40 |
| Vinyl acetate content [wt.-%] | - | 57 | 51 |
| Residual double-bonds [%] | <1 | - | - |
| GMA content [wt.-%] | 3 | 3 | 9 |
| Mooney Viscosity ML(1+4) 100°C) (MU) | 90 | 19 | 13 |

General method of coin cell fabrication

Step (1) - Dissolution: A certain amount of the copolymer A-H is dissolved in the solvent (NMP) in a shaker overnight at room temperature to form a binder solution (5 wt.-%).

Step (2) - Cathode slurry composition preparation: The binder solution from step 1 is mixed with the active material (NMC) and the conductive material (conductive carbon black Super P) in a planetary ball mill (milling conditions: 28 Hz, 6 minutes, room temperature) to obtain the cathode slurry composition.

| Component | Weight [g] |
|---|---|
| Binder solution in NMP, 5 wt.-% =2.85 g NMP + 0.15 g copolymer | 3.00 |
| Conductive carbon black (Super P) | 0.15 |
| Active material (NMC) | 1.20 |

Weight ratio: NMC/polymer/NMP/Super P = 80/10/190/10 (Polymer concentration in NMP = 5 wt.-%)

Step (3) - Production of the cathode disc: The cathode slurry composition was applied with a bar coater onto a current collector (aluminium foil) using 2.8 mm/s coating speed to form a cathode sheet. The coater slit gap of the coating machine was adjusted to 150 μm to obtain a pre-determined coating thickness.

Step (4) - Drying: The cathode sheet was dried in an oven at 80°C for 120 minutes to remove NMP and moisture. After drying the cathode sheet was calendered to adjust the areal density (weight: 12-19 mg/disc; disc area: 201 $mm^2$; density: 60-95 $g/m^2$). From the calandered cathode sheet a cathode disc (ø 16 mm) was punched using a machine from ShenZhen PengXiang YunDa Machinery Technology Co., Model: PX-CP-S2. The punch edge was sharp without burr.

Step (5) - Assembly of the lithium-ion secondary battery: Assembly and pressing of the lithium-ion secondary battery is carried out in a glove box. The assembly comprises the coin cell casing top (2032 type; negative side), the nickel sponge, the lithium disc (as anode), the porous separator (Celgard 2340), the cathode disc and the casing bottom (positive side). All parts were assembled layer-by-layer. The electrolyte solution was dropped in during the assembly step in order to completely fill the free volume of the coin cell. Finally, the coin cell case was pressed by the press machine in the glovebox. An open-circuit voltage test was performed to check, whether short-circuit took place or not.

Table 3a: Determination of the passage conductivity of the inventive copolymers A to C

| Copolymer | A<br>GMA-HNBR | B<br>GMA-EVM | C<br>GMA-EVM |
|---|---|---|---|
| Passage conductivity [S/cm] | $5.38 \cdot 10^{-11}$ | $7.75 \cdot 10^{-14}$ | $3.34 \cdot 10^{-13}$ |

Table 3b: Determination of the passage conductivity of the non-inventive copolymers D to H

| Copolymer | D Therban 3907* | E EVM 600* | F EVM 700* | G EVM 800* | H EVM 900* |
|---|---|---|---|---|---|
| Passage conductivity [S/cm] | $2.78 \cdot 10^{-11}$ | $8.77 \cdot 10^{-14}$ | $7.75 \cdot 10^{-14}$ | $2.33 \cdot 10^{-14}$ | $7.87 \cdot 10^{-16}$ |
| *non-inventive copolymer | | | | | |

The results in Table 3 show that epoxy group-containing copolymers have a higher passage conductivity than copolymers without epoxy groups. Here the copolymer A has to be compared towards the non-inventive copolymer D (Therban® 3907) and the copolymer B, respective copolymer C towards the non-inventive copolymer E to H (EVM). A higher conductivity is beneficial for the general battery performance and the cathode composition. The non-inventive copolymers E and F are comparable to the inventive copolymers B and C.

Table 4a: Determination of the peel strength of the cathode sheet, discharging specific capacity and the capacity retention of the lithium-ion battery (inventive copolymer A to C)

| Copolymer | A GMA-HNBR | B GMA-EVM | C GMA-EVM |
|---|---|---|---|
| Peel strength [N/m] | 345 | 156 | 194 |
| Discharging specific capacity [mAh/g] | 137 | 113 | 120 |
| Capacity retention | B | A | B |

Table 4b: Determination of the peel strength of the cathode sheet, discharging specific capacity and the capacity retention of the lithium-ion battery (non-inventive copolymers D to H)

| Copolymer | D Therban 3907* | E EVM 600* | F EVM 700* | G EVM 800* | H EVM 900* |
|---|---|---|---|---|---|
| Peel strength [N/m] | 95 | 49 | 33 | 122 | 166 |
| Discharging specific capacity [mAh/g] | 131 | 109 | 12 | 14 | 14 |
| Capacity retention | C | C | nd** | nd** | B |
| *non-inventive copolymer, **due to too low initial discharging specific capacity no capacity retention was determined | | | | | |

The results in Table 4a and 4b show that the use of epoxy group-containing fluorine-free copolymers A, B and C as copolymer leads to higher peel strength and a high specific capacity than using HNBR or EVM.

A high peel strength is preferred since the cohesion of the active material and the adhesion of active material to the current collector is important for the longevity of the lithium-ion battery.

A high capacity retention is preferred to obtain long lifetime of the battery.

While US-A-2018/175366 discloses many different binders for battery applications including butyl acrylate-acrylonitrile-glycidyl methacrylate copolymers, there is no hint that epoxy group-containing fluorine-free copolymers such as epoxy group-containing ethylene-vinyl acetate copolymers or epoxy group-containing nitrile rubber copolymers provide cathodes that have excellent high peel strength, improved cycling-stability and improved capacity compared to other binders disclosed in US-A-2018/175366.

Having thus described the present invention and the advantages thereof, it should be appreciated that the various aspects and embodiments of the present invention as disclosed herein are merely illustrative of specific ways to make and use the invention.

What is desired to be protected by letters patent is set forth in the following claims.

## Claims

1. An electrode composition for a cathode of a cell of a lithium-ion battery comprising

   (i) at least one cathode active material and
   (ii) at least one epoxy group-containing fluorine-free copolymer selected from

   (a) epoxy group-containing ethylene-vinyl acetate copolymers comprising

   - a vinyl acetate unit in an amount of at least 25% by weight; and
   - an ethylene unit in an amount of at least 5% by weight; and
   - an epoxy group-containing monomer unit in an amount of 0.01 to 30% by weight;

   in each case based on the epoxy group-containing ethylene-vinyl acetate copolymer; and
   (b) epoxy group-containing nitrile rubber copolymer comprising

   - a $\alpha,\beta$-unsaturated nitrile unit in an amount of 5 to 60% by weight; and
   - a conjugated diene unit, which is optionally fully or partially hydrogenated in an amount of 10 to 94.99% by weight; and
   - an epoxy group-containing monomer unit in an amount of 0.01 to 30% by weight;

   in each case based on the epoxy group-containing nitrile rubber copolymer.

2. The electrode composition according to claim 1, wherein the epoxy group-containing fluorine-free copolymer (ii) comprises repeating units derived from one or more epoxy group-containing monomer(s) of the general formula (I)

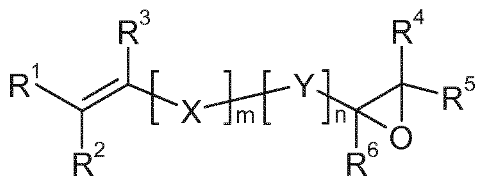

(I)

wherein

m is 0 or 1 and
X is O, $O(CR_2)_p$, $(CR_2)_pO$, C(=O)O, $C(=O)O(CR_2)_p$, C(=O)NR, $(CR_2)_p$, N(R), $N(R)(CR_2)_p$, P(R), $P(R)(CR_2)_p$, P(=O)(R), $P(=O)(R)(CR_2)_p$, S, $S(CR_2)_p$, S(=O), $S(=O)(CR_2)_p$, $S(=O)_2(CR_2)_p$ or $S(=O)_2$, wherein R in these radicals may have the same definitions as $R^1$-$R^6$
Y represents repeating units derived from one or more, mono- or polyunsaturated monomer(s), comprising conjugated or non-conjugated dienes, alkynes and vinyl compounds, or represents a structural element which derives from polymers comprising polyethers, more particularly polyalkylene glycol ethers and polyalkylene oxides, polysiloxanes, polyols, polycarbonates, polyurethanes, polyisocyanates, polysaccharides, polyesters and polyamides,
n and p are the same or different and are each in the range of 0 to 10 000,
R, $R^1$, $R^2$, $R^3$, $R^4$, $R^5$ and $R^6$ are identical or different and are H, a linear or branched, saturated or mono- or polyunsaturated alkyl radical, a saturated or mono- or polyunsaturated carbo- or heterocyclyl radical, aryl, heteroaryl, arylalkyl, heteroarylalkyl, alkoxy, aryloxy, heteroaryloxy, amino, amido, carbamoyl, alkylthio, arylthio, sulphanyl, thiocarboxyl, sulphinyl, sulphono, sulphino, sulpheno, sulphonic acids, sulphamoyl, hydroxyimino, alkoxycarbonyl, F, Cl, Br, I, hydroxyl, phosphonato, phosphinato, silyl, silyloxy, nitrile, borates, selenates, carbonyl, carboxyl, oxycarbonyl, oxysulphonyl, oxo, thioxo, epoxy, cyanates, thiocyanates, isocyanates, thioisocyanates or isocyanides.

3. The electrode composition according to claim 1 or 2, wherein the copolymerized epoxy group-containing monomer is selected from the group consisting of 2-ethylglycidyl acrylate, 2-ethylglycidyl methacrylate, 2-(n-propyl)glycidyl acrylate, 2-(n-propyl)glycidyl methacrylate, 2-(n-butyl)glycidyl acrylate, 2-(n-butyl)glycidyl methacrylate, glycidylmethyl acrylate, glycidylmethyl methacrylate, glycidyl methacrylate, glycidyl acrylate, (3',4'-epoxyheptyl)-2-ethyl acrylate, (3',4'-epoxyheptyl)-2-ethyl methacrylate, 6',7'-epoxyheptyl acrylate, 6',7'-epoxyheptyl methacrylate, allyl glycidyl ether, allyl 3,4-epoxyheptyl ether, 6,7-epoxyheptyl allyl ether, vinyl glycidyl ether, vinyl 3,4-epoxyheptyl ether, 3,4-epoxyheptyl vinyl ether, 6,7-epoxyheptyl vinyl ether, o-vinylbenzyl glycidyl ether, m-vinylbenzyl glycidyl ether, p-vinylbenzyl glycidyl ether, 3-vinylcyclohexene oxide and mixtures thereof.

**4.** The electrode composition according to any of claims 1 to 3, wherein the epoxy group-containing copolymer (ii) has a Mooney viscosity (ML(1+4) 100°C) of $\geq$ 5 Mooney units (MU), determined by means of a shearing disc viscometer according to ISO 289 (ISO 289-1:2014-02) at 100°C.

**5.** The electrode composition according to any of claims 1 to 4, wherein the epoxy group-containing copolymer (ii) has a glass transition temperatures in the range from +40°C to -50°C, measured by DSC with a heating rate of 20K/min.

**6.** The electrode composition according to any of claims 1 to 5, wherein the epoxy group-containing fluorine-free copolymer (ii) is present in an amount of 0.1 to 15% by weight, based on the total weight of the electrode composition.

**7.** The electrode composition according to any of claims 1 to 6, wherein said at least one cathode active material (i) comprises a compound of the following Formula 1:

$$Li_{1+a}Ni_xCo_yMn_zM_wO_2 \qquad \text{[Formula 1]}$$

wherein, M may be at least one selected from the group consisting of aluminum (Al), copper (Cu), iron (Fe), vanadium (V), chromium (Cr), titanium (Ti), zirconium (Zr), zinc (Zn), tantalum (Ta), niobium (Nb), magnesium (Mg), boron (B), tungsten (W), and molybdenum (Mo), and a, x, y, z, and w represent an atomic fraction of each independent element, wherein $-0.5 \leq a \leq 0.5$, $0<x \leq 1$, $0<y \leq 1$, $0 \leq z \leq 1$, $0 \leq w \leq 1$, and $0<x+y+z \leq 1$ or lithium iron phosphates (LFP).

**8.** A cathode slurry composition comprising:

- an electrode composition according to any of claims 1 to 7,
- at least one conductive material, and
- at least one solvent.

**9.** The cathode slurry composition according to claim 8, wherein the at least one conductive material is selected from the group consisting of carbon black, acetylene black, Ketjen black, channel black, furnace black, lamp black and summer black, natural and artificial graphite, expanded graphite, conductive fibres such as carbon fibre and metal fiber, metal powders such as carbon fluoride, aluminium and nickel powder, and carbon nanotube, graphene, graphene oxide and their mixtures.

**10.** The cathode slurry composition according to claim 8 or 9, wherein the at least one conductive material is present in an amount of 0.5 to 50% by weight based on the total solid weight of the cathode slurry composition.

**11.** The cathode slurry composition according to any of claims 8 to 10, wherein the at least one solvent comprises cyclic aliphatic hydrocarbons, aromatic hydrocarbons, ketones, chlorine based aliphatic hydrocarbons, esters, acylonitriles, ethers, alcohols, nitriles or amides, preferably methyl ethyl ketone, toluene or N-methylpyrrolidone.

**12.** A cathode comprising a current collector and a cathode active material layer, whereas the cathode active material layer comprises the electrode composition according to any of claims 1 to 7 and the conductive material.

**13.** The cathode according to claim 12, wherein the current collector is selected from a group consisting of iron, copper, aluminium, nickel, sintered carbon, stainless steel, stainless steel treated with carbon, titanium, tantalum, gold, platinum, titanium or silver on the surface thereof; an aluminium-cadmium alloy, a non-conductive polymer treated with a conductive material on the surface thereof; a conductive polymer or a metal paste comprising metal powders of Ni, Al, Au, Ag, Pd, Cr, Ta, Cu or Ba.

**14.** A lithium-ion battery comprising at least one cell comprising an anode, a cathode according to claim 12 or 13, a separator and an electrolytic solution based on a lithium salt and on an organic solvent.

**15.** Use of the epoxy group-containing fluorine-free copolymer as defined in any of claims 1 to 6 as a binder in an electrode composition for a cathode of a cell of a battery.

**Patentansprüche**

1. Elektrodenzusammensetzung für eine Kathode einer Zelle einer Lithiumionenbatterie, umfassend

(i) mindestens ein Kathodenaktivmaterial und
(ii) mindestens ein Epoxygruppe enthaltendes fluorfreies Copolymer ausgewählt aus

(a) Epoxygruppe enthaltenden Ethylen-Vinylacetat-Copolymeren, umfassend

- eine Vinylacetateinheit in einer Menge von mindestens 25 Gew.%; und
- eine Ethyleneinheit in einer Menge von mindestens 5 Gew.%; und
- eine Epoxygruppe enthaltende Monomereinheit in einer Menge von 0,01 bis 30 Gew.%;

in jedem Fall basierend auf dem Epoxygruppe enthaltenden Ethylen-Vinylacetat-Copolymer; und

(b) Epoxygruppe enthaltendes Nitrilkautschukcopolymer, umfassend

- eine $\alpha,\beta$-ungesättigte Nitrileinheit in einer Menge von 5 bis 60 Gew.%; und
- eine konjugierte Dieneinheit, die gegebenenfalls vollständig oder teilweise hydriert ist, in einer Menge von 10 bis 94,99 Gew.%; und
- eine Epoxygruppe enthaltende Monomereinheit in einer Menge von 0,01 bis 30 Gew.%;

in jedem Fall basierend auf dem Epoxygruppe enthaltenden Nitrilkautschukcopolymer.

2. Elektrodenzusammensetzung nach Anspruch 1, wobei das Epoxygruppe enthaltende fluorfreie Copolymer (ii) sich wiederholende Einheiten umfasst, die von einem oder mehreren Epoxygruppe enthaltenden Monomer(en) mit der allgemeinen Formel (I) abgeleitet sind:

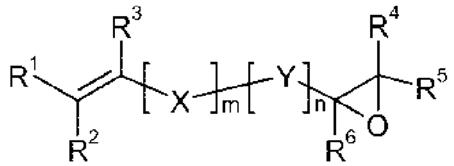
(I)

wobei

m 0 oder 1 ist, und
X O, $O(CR_2)_p$, $(CR_2)_pO$, C(=O)O, $C(=O)O(CR_2)_p$, C(=O)NR, $(CR_2)_p$, N(R), $N(R)(CR_2)_p$, P(R), $P(R)(CR_2)_p$, P(=O)(R), $P(=O)(R)(CR_2)_p$, S, $S(CR_2)_p$, S(=O), $S(=O)(CR_2)_p$, $S(=O)_2(CR_2)_p$ oder $S(=O)_2$ ist, wobei R in diesen Resten die gleichen Definitionen wie $R^1$-$R^6$ haben kann,
Y sich wiederholende Einheiten wiedergibt, die von einem oder mehreren, einfach oder mehrfach ungesättigten Monomer(en) abgeleitet sind, die konjugierte oder nicht-konjugierte Diene, Alkine und Vinylverbindungen umfassen, oder ein Strukturelement wiedergibt, das von Polymeren abgeleitet ist, die Polyether, insbesondere Polyalkylenglykolether und Polyalkylenoxide, Polysiloxane, Polyole, Polycarbonate, Polyurethane, Polyisocyanate, Polysaccharide, Polyester und Polyamide umfassen,
n und p gleich oder verschieden sind und jeweils im Bereich von 0 bis 10 000 liegen,
R, $R^1$, $R^2$, $R^3$, $R^4$, $R^5$ und $R^6$ identisch oder verschieden sind und H, ein linearer oder erzweigter, gesättigter oder einfach oder mehrfach ungesättigter Alkylrest, ein gesättigter oder einfach oder mehrfach ungesättigter Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkylthio, Arylthio, Sulfanyl, Thiocarboxyl, Sulfinyl, Sulfono, Sulfino, Sulfeno, Sulfonsäuren, Sulfamoyl, Hydroxyimino, Alkoxycarbonyl, F, Cl, Br, I, Hydroxyl, Phosphonato, Phosphinato, Silyl, Silyloxy, Nitril, Borate, Selenate, Carbonyl, Carboxyl, Oxycarbonyl, Oxysulfonyl, Oxo, Thioxo, Epoxy, Cyanate, Thiocyanate, Isocyanate, Thioisocyanate oder Isocyanide sind.

3. Elektrodenzusammensetzung nach Anspruch 1 oder 2, wobei das copolymerisierte Epoxygruppe enthaltende Monomer ausgewählt ist aus der Gruppe bestehend aus 2-Ethylglycidylacrylat, 2-Ethylglycidylmethacrylat, 2-(n-Propyl)glycidylacrylat, 2-(n-Propyl)-glycidylmethacrylat, 2-(n-Butyl)glycidylacrylat, 2-(n-Butyl)glycidylmethacrylat, Glycidylmethylacrylat, Glycidylmethylmethacrylat, Glycidylmethacrylat, Glycidylacrylat, (3',4'-Epoxyheptyl)-2-ethylacrylat, (3',4'-Epoxyheptyl)-2-ethylmethacrylat, 6',7'-Epoxyheptylacrylat, 6',7'-Epoxyheptylmethacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzylglycidylether, m-Vinylbenzylglycidylether, p-Vinylbenzylglycidylether, 3-Vinylcyclohexenoxid und Mischungen davon.

**4.** Elektrodenzusammensetzung nach einem der Ansprüche 1 bis 3, wobei das Epoxygruppe enthaltende Copolymer (ii) eine Mooney-Viskosität (ML(1+4) 100°C) $\geq$ 5 Mooney-Einheiten (MU) hat, bestimmt mittels eines Scherscheiben-Viskosimeters gemäß ISO 289 (ISO 289-1:2014-02) bei 100 °C.

**5.** Elektrodenzusammensetzung nach einem der Ansprüche 1 bis 4, wobei das Epoxygruppe enthaltende Copolymer (ii) eine Glasübergangstemperatur im Bereich von +40 °C bis -50 °C aufweist, gemessen mittels DSC mit einer Heizrate von 20K/min.

**6.** Elektrodenzusammensetzung nach einem der Ansprüche 1 bis 5, wobei das Epoxygruppe enthaltende fluorfreie Copolymer (ii) in einer Menge von 0,1 bis 15 Gew.% vorhanden ist, bezogen auf das Gesamtgewicht der Elektrodenzusammensetzung.

**7.** Elektrodenzusammensetzung nach einem der Ansprüche 1 bis 6, wobei das mindestens eine Kathodenaktivmaterial (i) eine Verbindung mit der folgenden Formel 1:

$$Li_{1+a}Ni_xCO_yMn_zM_wO_2 \qquad \text{[Formel 1]}$$

wobei M mindestens eines ausgewählt aus der Gruppe bestehend aus Aluminium (Al), Kupfer (Cu), Eisen (Fe), Vanadium (V), Chrom (Cr), Titan (Ti), Zirconium (Zr), Zink (Zn), Tantal (Ta), Niob (Nb), Magnesium (Mg), Bor (B), Wolfram (W) und Molybdän (Mo) sein kann, und a, x, y, z und w einen Atomanteil von jedem unabhängigen Element wiedergeben, wobei $-0{,}5 \leq a \leq 0{,}5$, $0 < x \leq 1$, $0 < y \leq 1$, $0 \leq z \leq 1$, $0 \leq w \leq 1$ und $0 < x+y+z \leq 1$, oder Lithiumeisenphosphate (LFP) umfasst.

**8.** Kathodenaufschlämmungszusammensetzung, umfassend:

- eine Elektrodenzusammensetzung nach einem der Ansprüche 1 bis 7,
- mindestens ein leitfähiges Material und
- mindestens ein Lösungsmittel.

**9.** Kathodenaufschlämmungszusammensetzung nach Anspruch 8, wobei das mindestens eine leitfähige Material ausgewählt ist aus der Gruppe bestehend aus Ruß, Acetylenruß, Ketjen-Ruß, Kanalruß, Ofenruß, Lampenruß und Sommerruß, natürlichem und künstlichem Graphit, expandiertem Graphit, leitfähigen Fasern, wie Kohlefaser und Metallfaser, Metallpulvern, wie Kohlenstofffluorid-, Aluminium- und Nickelpulver, und Kohlenstoffnanoröhrchen, Graphen, Graphenoxid und ihren Mischungen.

**10.** Kathodenaufschlämmungszusammensetzung nach Anspruch 8 oder 9, wobei das mindestens eine leitfähige Material in einer Menge von 0,5 bis 50 Gew.% vorhanden ist, bezogen auf das gesamte Feststoffgewicht der Kathodenaufschlämmungszusammensetzung.

**11.** Kathodenaufschlämmungszusammensetzung nach einem der Ansprüche 8 bis 10, wobei das mindestens eine Lösungsmittel cyclische aliphatische Kohlenwasserstoffe, aromatische Kohlenwasserstoffe, Ketone, aliphatische Kohlenwasserstoffe auf Chlorbasis, Ester, Acylnitrile, Ether, Alkohole, Nitrile oder Amide, vorzugsweise Methylethylketon, Toluol oder N-Methylpyrrolidon umfasst.

**12.** Kathode, umfassend einen Stromsammler und eine Kathodenaktivmaterialschicht, wobei die Kathodenaktivmaterialschicht die Elektrodenzusammensetzung nach einem der Ansprüche 1 bis 7 und das leitfähige Material umfasst.

**13.** Kathode nach Anspruch 12, wobei der Stromsammler ausgewählt ist aus einer Gruppe bestehend aus Eisen, Kupfer, Aluminium, Nickel, gesintertem Kohlenstoff, rostfreiem Stahl, rostfreiem Stahl, der an seiner Oberfläche mit Kohlenstoff, Titan, Tantal, Gold, Platin, Titan oder Silber behandelt worden ist; einer Aluminium-Cadmium-Legierung, einem nicht-leitfähigen Polymer, das an seiner Oberfläche mit einem leitfähigen Material behandelt worden ist; einem leitfähigen Polymer oder einer Metallpaste, umfassend Metallpulver von Ni, Al, Au, Ag, Pd, Cr, Ta, Cu oder Ba.

**14.** Lithiumionenbatterie, umfassend mindestens eine Zelle, umfassend eine Anode, eine Kathode gemäß Anspruch

12 oder 13, einen Separator und eine Elektrolytlösung, die auf einem Lithiumsalz und einem organischen Lösungsmittel basiert.

15. Verwendung des Epoxygruppe enthaltenden fluorfreien Copolymers, wie in einem der Ansprüche 1 bis 6 definiert, als Bindemittel in einer Elektrodenzusammensetzung für eine Kathode einer Zelle einer Batterie.

**Revendications**

1. Composition d'électrode pour une cathode d'une cellule d'une batterie lithium-ion comprenant

(i) au moins un matériau actif de cathode et
(ii) au moins un copolymère exempt de fluor contenant un groupe époxy choisi parmi

(a) des copolymères d'éthylène-acétate de vinyle contenant un groupe époxy comprenant

- un motif d'acétate de vinyle en une quantité d'au moins 25 % en poids ; et
- un motif d'éthylène en une quantité d'au moins 5 % en poids ; et
- un motif monomérique contenant un groupe époxy en une quantité de 0,01 à 30 % en poids ;

en chaque cas sur la base du copolymère d'éthylène-acétate de vinyle contenant un groupe époxy ; et
(b) un copolymère de caoutchouc de nitrile contenant un groupe époxy comprenant

- un motif de nitrile $\alpha,\beta$-insaturé en une quantité de 5 à 60 % en poids ; et
- un motif de diène conjugué, qui est éventuellement totalement ou partiellement hydrogéné en une quantité de 10 à 94,99 % en poids ; et
- un motif monomérique contenant un groupe époxy en une quantité de 0,01 à 30 % en poids ;

en chaque cas sur la base du copolymère de caoutchouc de nitrile contenant un groupe époxy.

2. Composition d'électrode selon la revendication 1, le copolymère exempt de fluor contenant un groupe époxy (ii) comprenant des motifs répétitifs issus d'un ou plusieurs monomères contenant un groupe époxy de la formule générale (I)

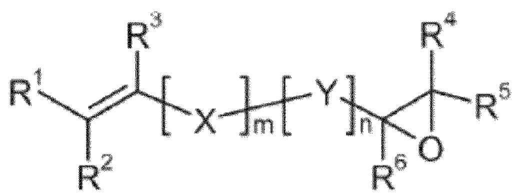

(I)

m étant 0 ou 1 et

X étant O, $O(CR_2)_p$, $(CR_2)_pO$, C(=O)O, $C(=O)O(CR_2)_p$, C(=O)NR, $(CR_2)_p$, N(R), $N(R)(CR_2)_p$, P(R), $P(R)(CR_2)_p$, P(=O)(R), $P(=O)(R)(CR_2)_p$, S, $S(CR_2)_p$, S(=O), $S(=O)(CR_2)_p$, $S(=O)_2(CR_2)_p$ ou $S(=O)_2$, R dans ces radicaux pouvant avoir les mêmes définitions que $R^1$ à $R^6$
Y représentant des motifs répétitifs issus d'un ou plusieurs monomères monoinsaturés ou polyinsaturés, comprenant des diènes conjugués ou non conjugués, des alcynes et des composés vinyliques, ou représentant un élément structural qui est issu de polymères comprenant des polyéthers, plus particulièrement des éthers de polyalkylèneglycol et des poly(oxyde d'alkylène), des polysiloxanes, des polyols, des polycarbonates, des polyuréthanes, des polyisocyanates, des polysaccharides, des polyesters et des polyamides,
n et p étant identiques ou différents et étant chacun dans la plage de 0 à 10 000,
R, $R^1$, $R^2$, $R^3$, $R^4$, $R^5$ et $R^6$ étant identiques ou différents et étant H, un radical alkyle saturé ou monoinsaturé ou polyinsaturé, linéaire ou ramifié, un radical carbocyclyle ou hétérocyclyle saturé ou monoinsaturé ou polyinsaturé, aryle, hétéroaryle, arylalkyle, hétéroarylalkyle, alcoxy, aryloxy, hétéroaryloxy, amino, amido, carbamoyle, alkylthio, arylthio, sulfanyle, thiocarboxyle, sulfinyle, sulfono, sulfino, sulféno, des acides sulfoniques, sulfamoyle, hydroxyimino, alcoxycarbonyle, F, Cl, Br, I, hydroxyle, phosphonato, phosphinato, silyle, silyloxy,

nitrile, des borates, des sélénates, carbonyle, carboxyle, oxycarbonyle, oxysulfonyle, oxo, thioxo, époxy, des cyanates, des thiocyanates, des isocyanates, des thioisocyanates ou des isocyanures.

**3.** Composition d'électrode selon la revendication 1 ou 2, le monomère contenant un groupe époxy copolymérisé étant choisi dans le groupe constitué par l'acrylate de 2-éthylglycidyle, le méthacrylate de 2-éthylglycidyle, l'acrylate de 2-(n-propyl)glycidyle, le méthacrylate de 2-(n-propyl)glycidyle, l'acrylate de 2-(n-butyl)glycidyle, le méthacrylate de 2-(n-butyl)glycidyle, l'acrylate de glycidylméthyle, le méthacrylate de glycidylméthyle, le méthacrylate de glycidyle, l'acrylate de glycidyle, l'acrylate de (3',4'-époxyheptyl)-2-éthyle, le méthacrylate de (3',4'-époxyheptyl)-2-éthyle, l'acrylate de 6',7'-époxyheptyle, le méthacrylate de 6',7'-époxyheptyle, l'éther d'allyle et de glycidyle, l'éther de 3,4-époxyheptyle et d'allyle, l'éther de 6,7-époxyheptyle et d'allyle, l'éther de vinyle et de glycidyle, l'éther de 3,4-époxyheptylie et de vinyle, l'éther de 3,4-époxyheptyle et de vinyle, l'éther de 6,7-époxyheptyle et de vinyle, l'éther de o-vinylbenzyle et de glycidyle, l'éther de m-vinylbenzyle et de glycidyle, l'éther de p-vinylbenzyle et de glycidyle, l'oxyde de 3-vinylcyclohexène et des mélanges correspondants.

**4.** Composition d'électrode selon l'une quelconque des revendications 1 à 3, le copolymère contenant un groupe époxy (ii) possédant une viscosité Mooney (ML(1 +4) 100 °C) de ≥ 5 unités Mooney (MU), déterminée au moyen d'un viscosimètre à disque de cisaillement selon la norme ISO 289 (ISO 289-1:2014-02) à 100 °C.

**5.** Composition d'électrode selon l'une quelconque des revendications 1 à 4, le copolymère contenant un groupe époxy (ii) possédant des températures de transition vitreuse dans la plage de + 40 °C à -50 °C, mesurées par DSC avec une vitesse de chauffage de 20 K/min.

**6.** Composition d'électrode selon l'une quelconque des revendications 1 à 5, le copolymère exempt de fluor contenant un groupe époxy (ii) étant présent en une quantité de 0,1 à 15 % en poids, sur la base du poids total de la composition d'électrode.

**7.** Composition d'électrode selon l'une quelconque des revendications 1 à 6, ledit au moins un matériau actif de cathode (i) comprenant un composé de la formule suivante 1 :

$$Li_{1+a}Ni_xCO_yMn_zM_wO_2 \qquad \text{[formule 1]}$$

M pouvant être au moins un élément choisi dans le groupe constitué par l'aluminium (Al), le cuivre (Cu), le fer (Fe), le vanadium (V), le chrome (Cr), le titane (Ti), le zirconium (Zr), le zinc (Zn), le tantale (Ta), le niobium (Nb), le magnésium (Mg), le bore (B), le tungstène (W) et le molybdène (Mo), et a, x, y, z et w représentant une fraction atomique de chaque élément indépendant, $-0,5 \leq a \leq 0,5$, $0 < x \leq 1$, $0 < y \leq 1$, $0 \leq z \leq 1$, $0 \leq w \leq 1$, et $0 < x + y + z \leq 1$, ou des phosphates de fer lithiés (LFP).

**8.** Composition de suspension de cathode comprenant :

- une composition d'électrode selon l'une quelconque des revendications 1 à 7,
- au moins un matériau conducteur, et
- au moins un solvant.

**9.** Composition de suspension de cathode selon la revendication 8, l'au moins un matériau conducteur étant choisi dans le groupe constitué par le noir de carbone, le noir d'acétylène, le noir de Ketjen, le noir de canal, le noir de four, le noir de lampe et le noir d'été, le graphite naturel et artificiel, le graphite expansé, les fibres conductrices telles que la fibre de carbone et la fibre métallique, les poudres métalliques telles que le fluorure de carbone, la poudre d'aluminium et de nickel, et le nanotube de carbone, le graphène, l'oxyde de graphène et leurs mélanges.

**10.** Composition de suspension de cathode selon la revendication 8 ou 9, l'au moins un matériau conducteur étant présent en une quantité de 0,5 à 50 % en poids sur la base du poids solide total de la composition de suspension de cathode.

**11.** Composition de suspension de cathode selon l'une quelconque des revendications 8 à 10, l'au moins un solvant comprenant des hydrocarbures aliphatiques cycliques, des hydrocarbures aromatiques, des cétones, des hydrocarbures aliphatiques à base de chlore, des esters, des acylonitriles, des éthers, des alcools, des nitriles ou des amides, préférablement la méthyléthylcétone, le toluène ou la N-méthylpyrrolidone.

12. Cathode comprenant un collecteur de courant et une couche de matériau actif de cathode, tandis que la couche de matériau actif de cathode comprend la composition d'électrode selon l'une quelconque des revendications 1 à 7 et le matériau conducteur.

13. Cathode selon la revendication 12, le collecteur de courant étant choisi dans un groupe constitué par le fer, le cuivre, l'aluminium, le nickel, le carbone fritté, l'acier inoxydable, l'acier inoxydable traité par du carbone, du titane, du tantale, de l'or, du platine, du titane ou de l'argent sur la surface de celui-ci ; un alliage aluminium-cadmium, un polymère non conducteur traité par un matériau conducteur sur la surface de celui-ci ; un polymère conducteur ou une pâte métallique comprenant des poudres métalliques de Ni, Al, Au, Ag, Pd, Cr, Ta, Cu ou Ba.

14. Batterie lithium-ion comprenant au moins une cellule comprenant une anode, une cathode selon la revendication 12 ou 13, un séparateur et une solution électrolytique à base d'un sel de lithium et d'un solvant organique.

15. Utilisation du copolymère exempt de fluor contenant un groupe époxy tel que défini dans l'une quelconque des revendications 1 à 6 en tant qu'un liant dans une composition d'électrode pour une cathode d'une cellule d'une batterie.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2658909 A
- US 2006228627 A
- US 2014114025 A
- US 20150333332 A
- US 2017335037 A
- US 2018175366 A
- EP 0374666 A
- EP 3015483 A
- EP 0374666 B1
- DD 154702
- WO 02100941 A
- WO 02100905 A
- US 3700637 A
- DE 2539132 A
- EP 0134023 A
- DE 3541689 A
- DE 3540918 A
- EP 0298386 A
- DE 3529252 A
- DE 3433392 A
- US 4464515 A
- US 4503196 A
- EP 0471250 A
- US 4631315 A
- US 6683136 B
- EP 0897933 A
- US 6522408 B


### Non-patent literature cited in the description


- Ullmann's Encyclopedia of Industrial Chemistry. vol. 31, 345-355
- Ullmann's Encyclopaedia of Industrial Chemistry. vol. 13, 75-108